Europäisches Patentamt

European Patent Office

Office européen des brevets

(11) Numéro de publication: **0 418 180 A1**

## DEMANDE DE BREVET EUROPEEN

(21) Numéro de dépôt: 90460032.7

(22) Date de dépôt: 07.09.90

(51) Int. Cl.5: **H04N 9/79, H04N 5/782, H04N 9/81, H04N 9/88**

(30) Priorité: 13.09.89 FR 8912220

(43) Date de publication de la demande:
20.03.91 Bulletin 91/12

(84) Etats contractants désignés:
**DE ES GB IT NL**

(71) Demandeur: **ETAT FRANCAIS représenté par le Ministre des P.T.T. (Centre National d'Etudes des Télécommunications-CNET) 38-40 rue du Général Leclerc F-92131 Issy-les-Moulineaux(FR)**

Demandeur: **TELEDIFFUSION DE FRANCE SA**
10 rue d'Oradour sur Glane
**F-75732 Paris Cédex 15(FR)**

(72) Inventeur: **Gaucher, Gilbert**
**12, rue Beaumanoir**
**F-35410 Chateaugiron(FR)**
Inventeur: **Gautier, Christian**
**Le Boulais**
**F-35490 Acigne(FR)**

(74) Mandataire: **Le Guen, Louis François**
**Cabinet Louis Le Guen 38, rue Levavasseur**
**B.P. 91**
**F-35802 Dinard Cédex(FR)**

(54) Procédé d'enregistrement et de lecture de signaux de télévision à haute définition.

(57) Le procédé s'applique en particulier à des signaux HDMAC. A l'enregistrement, le contenu de chaque signal vidéo (HDMAC), est décompressé temporellement pour être enregistré par l'un ou l'autre de deux canaux (A, B) sur une suite de paires de pistes correspondantes d'une bande magnétique. Les deux canaux servent à enregistrer pratiquement simultanément le contenu d'une ligne impaire (2i + 1) et celui de la ligne paire (2(i + 1)) qui la suit. A la lecture, les contenus d'un couple de lignes impaire (2i + 1) et paire (2(i + 1)) sont décompréssés temporellement pour restituer séquentiellement les signaux vidéo (HDMAC). L'enregistrement d'une trame occupe une paire et demi de pistes.

Des moyens pour mettre en oeuvre le procédé sont également décrits.

FIG.1

FIG.2

# PROCÉDÉ D'ENREGISTREMENT ET DE LECTURE DE SIGNAUX DE TÉLÉVISION À HAUTE DÉFINITION

La présente invention concerne un procédé d'enregistrement et de lecture de signaux de télévision à haute définition en utilisant des magnétoscopes grand-public légèrement modifiés. L'invention concerne également les moyens de mise en oeuvre du procédé.

Plusieurs systèmes de télévision à haute définition, en raccourci HDTV, sont en cours de développement dans le monde et, plus particulièrement en Europe et au Japon. En Europe, les projets de systèmes HDTV sont issus de la famille et doivent, entre autres, être compatibles avec le système D2-MAC/PAQUET. Pour mémoire, on rappelle que les signaux de télévision D2-MAC/PAQUET sont des signaux qui sont conformes à une nouvelle norme internationale, qui sont destinés à être transmis et diffusés à partir de satellites de télédiffusion et de télécommunications, et dont la largeur de bande de fréquences occupe 8,4 MHz.

Parmi les caractéristiques des signaux des systèmes HDTV, on peut citer la bande passante qui est de l'ordre de 10 à 12 MHz, et les signaux d'images et de son qui sont ceux du système de base compatible, mais qui sont accompagnés de données complémentaires participant à la reconstitution totale de l'image originale, telles que des données concernant des informa tions de mouvement. Plus particulièrement, le système suivant l'invention concerne un système HDTV connu sous le nom de HDMAC qui est caractérisé par une bande passante nécessaire de l'ordre de 12 MHz et des données complémentaires qui sont portées par les lignes de la suppression trame, qui ont un débit de 20,25 Mbit/s et qui sont insérées en duobinaire. Le multiplexage temporel des informations de données, de chrominance et de luminance du système HDMAC est conforme à la norme du système D2-MAC/PAQUET.

A titre d'exemple de solutions permettant l'enregistrement et la lecture de signaux de télévision D2-MAC/PAQUET dont la largeur de bande avoisine les 10 MHz, on pourra se reporter à la demande de brevet français n° 88 12512 déposée par les présents demandeurs le 21/09/88 et intitulée "Procédé d'enregistrement et de lecture sur bande magnétique de signaux D2-MAC/PAQUET". Dans cette solution, on a utilisé l'enregistrement de deux lignes consécutives étendues temporellement dans un rapport de deux. Ainsi, chaque canal traite des signaux dont le spectre de fréquences ne dépasse pas 5 MHz. Il sera donc possible d'utiliser les prochains magnétoscopes grand-publics dits super-VHS ou S.VHS.

Comme dans les systèmes HDTV, la largeur de bande atteint 12 MHz, la solution mentionnée ci-dessus ne convient plus. En pratique, dans ce cas, les solutions ne sont pas nombreuses. On peut prévoir d'augmenter le nombre de têtes sur le tambour pour enregistrer trois voies simultanément. La réalisation de transformateurs tournants devient alors très délicate et, de plus, l'égalisation des trois voies, à la lecture, devient difficile et, donc, d'un coût prohibitif.

Suivant l'invention, on a prévu d'augmenter la vitesse d'écriture en augmentant la vitesse de rotation du tambour de têtes. Ainsi, on reste compatible avec la solution mentionnée ci-dessus en ce qui concerne l'enregistrement des signaux du système D2-MAC/PAQUET.

Suivant une caractéristique de l'invention, il est prévu un procédé d'enregistrement et de lecture sur bande magnétique de signaux de système de télévision à haute définition, tels que des signaux. HDMAC, dans lequel, à l'enregistrement, le contenu de chaque signal vidéo; est décompressé temporellement pour être enregistré par l'un ou l'autre de deux canaux (A, B) sur une suite de paires de pistes correspondantes de la bande magnétique, les deux canaux servant à respectivement enregistrer pratiquement simultanément le contenu d'une ligne impaire $(2i + 1)$ et celui de la ligne paire $2(i + 1)$ qui la suit, et, à la lecture, les contenus d'un couple de lignes impaire $(2i + 1)$ et paire $2(i + 1)$ sont décompressés temporellement pour restituer séquentiellement les signaux vidéo, l'enregistrement d'une trame occupant une paire et demi de pistes.

Suivant une autre caractéristique, dans la suite de paires de pistes, les contenus des intervalles de suppression trames sont alternativement situées soit sensiblement à la fin du premier quart d'une paire de pistes, soit sensiblement à la fin du troisième quart d'une paire de pistes.

Suivant une autre caractéristique, le contenu de la ligne 625 d'une image est transmis simultanément par les deux canaux (A, B) pour être enregistré simultanément sur les deux pistes d'une paire.

Suivant une autre caractéristique, dans un ensemble de trois paires de pistes successives, chaque piste de la première paire enregistre les contenus de 104 lignes, chaque piste de la seconde paire également les contenus de 104 lignes, et chaque piste de la troisième paire les contenus de 105.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 montre des diagrammes temporels du signal vidéo HDMAC et des signaux vidéo étendus correspondants,

la Fig. 2 illustre l'organisation spatiale, par paires, des pistes d'une bande magnétique sur lesquelles sont enregistrés les signaux vidéo étendus de la Fig. 1,

la Fig. 3 est un schéma du système de calage du tambour de têtes de l'enregistreur magnétique,

la Fig. 4 est un diagramme spatial, à plus grande échelle qu'à la Fig. 2, montrant le motif d'enregistrement des lignes d'une image,

la Fig. 5 montre des diagrammes temporels illustrant le diagramme spatial de la Fig. 4,

la Fig. 6 est un bloc-diagramme général du système d'enregistrement et de lecture à deux canaux,

la Fig. 7 est une vue schématique d'un tambour de têtes utilisé dans le système de l'invention,

la Fig. 8 est un diagramme temporel illustrant l'organisation des signaux dans les deux canaux,

la Fig. 9 est un bloc-diagramme du circuit d'expansion temporelle du système de la Fig. 6,

la Fig. 10 est un bloc-diagramme d'une unité d'expansion temporelle des composantes luminance et chrominance utilisée dans le circuit d'expansion temporelle de la Fig. 9,

la Fig. 11 montre des diagrammes temporels illustrant le fonctionnement des unités d'expansion temporel de la Fig. 10,

la Fig. 12 est un bloc-diagramme du circuit de traitement des paquets de données utilisé dans le circuit d'expansion temporel de la Fig. 9,

la Fig. 13 montre des diagrammes temporels illustrant le fonctionnement du circuit de traitement de la Fig. 12,

la Fig. 14 est un bloc-diagramme général du circuit de compression temporel du système de la Fig. 6,

la Fig. 15 est un bloc-diagramme d'une unité de compression des composantes chrominance et luminance utilisée dans le circuit de la Fig. 14,

la Fig. 16 montre des diagrammes temporels illustrant le fonctionnement des unités de compression temporelle de la Fig. 15,

la Fig. 17 est un bloc-diagramme du circuit de traitement des paquets de données étendus utilisé dans le circuit de la Fig. 14, et

la Fig. 18 montre des diagrammes temporels illustrant le fonctionnement du circuit de traitement de la Fig. 17.

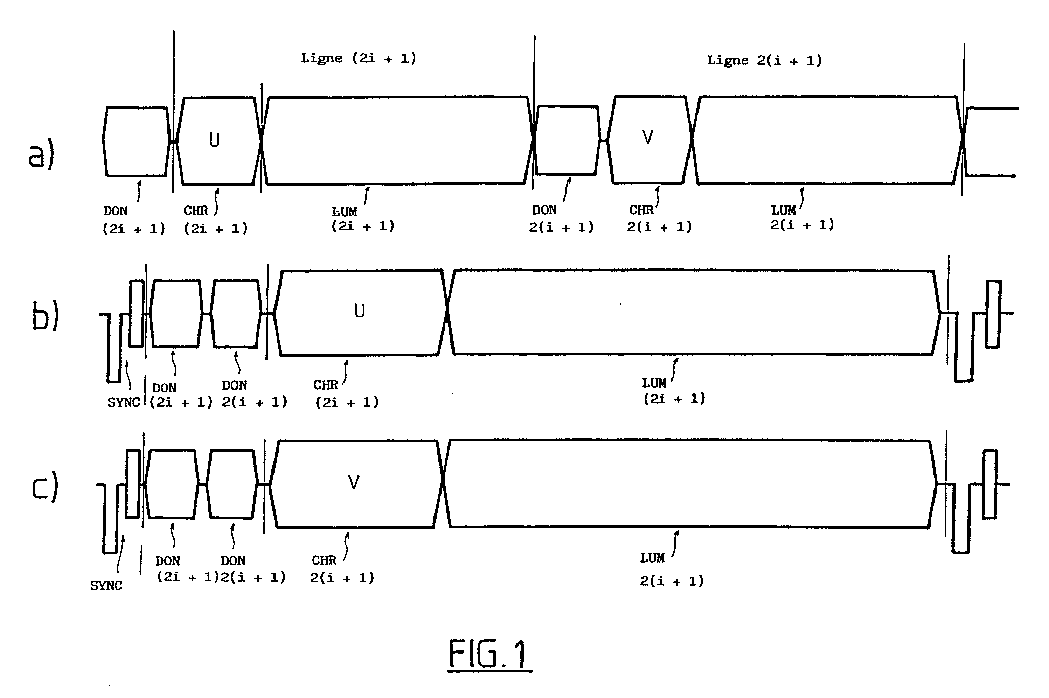

A la Fig. 1, la courbe a) représente les signaux vidéo du système HDMAC de deux lignes consécutives $(2i + 1)$ et $2(i + 1)$, où $i$ est un nombre entier positif ou nul. Dans chaque signal vidéo de la courbe a), on distingue trois zones:

- une première zone DON portant un message binaire codé en duobinaire, le message se composant d'un mot de synchronisation (6 bits), suivi de signaux de données et de son (99 bits),
- une zone CHR portant la composante de chrominance, c'est-à-dire alternativement le signal U dans les lignes impaires et le signal V dans les lignes paires, ce signal étant comprimé temporellement, et
- la zone LUM portant la composante de luminance qui est également comprimée temporellement, mais moins que la composante chrominance, l'ensemble du signal vidéo durant 64 microsecondes.

La courbe b) représente les signaux vidéo étendus qui sont transmis sur un premier canal A. Dans chaque signal de la courbe b), on distingue quatre zones:

- une première zone SYNC portant un signal de synchronisation analogique nécessaire aux circuits de synchronisation internes de l'enregistreur à bande magnétique, suivi d'un palier continu pour les périodes de clamping et d'une salve à 5,250 MHz qui est prévue pour l'asservissement d'un correcteur de base temps à la lecture,
- une zone DON + DON portant les données de la ligne $(2i + 1)$ suivies des données de la ligne $2(i + 1)$, courbe a),
- une zone CHR$(2i + 1)$ portant la composante de chrominance de la ligne $(2i + 1)$, courbe a), mais temporellement étendue,
- une zone LUM$(2i + 1)$ portant la composante de luminance de la ligne $(2i + 1)$, courbe a), mais étendue, étant donné qu'entre chaque zone est prévu un espace de mise en forme des transitions.

La courbe c) représente les signaux vidéo étendus qui sont transmis sur un second canal B. Dans chaque signal de la courbe c), on distingue aussi quatre zones, dont les deux premières SYNC et DON + DON portent les mêmes signaux, avec inversion de polarité, qu'à la courbe b), mais dont la troisième CHR$(2 + i)$ et LUM$(2 + i)$ sont relatives aux zones correspondantes de la courbe a).

En résumé, le signal de la courbe a) est divisé et étendu temporellement pour produire, d'une part, le signal de la courbe b) transmis sur le canal A et celui de la courbe c) transmis sur le canal B.

Suivant le procédé de l'invention, sachant que chaque ligne vidéo est constituée de 1316 échantillons, il faut utiliser pour l'échantillonnage une fréquence d'horloge de 10,5 MHz, ce qui correspond à une durée de ligne de 125,333 microsecondes. Pour effectuer l'expansion, les échantillons de la ligne utile du signal HDMAC sont mis en mémoire à une fréquence d'horloge de 20,25 MHz. En mode lecture de la mémoire, on utilise, pour la partie données, une horloge à 21 MHz et, pour les parties chrominance et luminance, une horloge à 10,5 MHz. Enfin, les lignes de suppression trame portant les données de complément à 20,25 MHz seront lues entièrement à la fréquence de 10,5 MHz pour ramener leur spectre à une valeur compatible avec la bande passante du canal.

Pour les traitements temporels de chaque ligne, on utilisera des circuits semblables à ceux qui ont été décrits dans la demande de brevet français n° 88 12512 déjà mentionnée, mais avec de nombreuses différences spécifiques au procédé de l'invention.

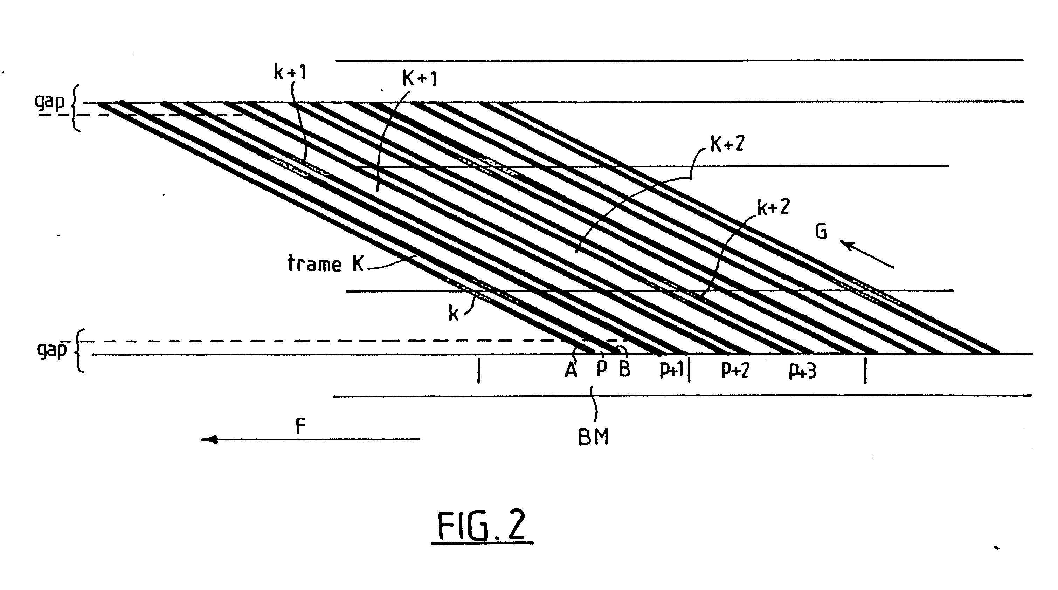

L'organisation des trames vidéo de la Fig. 2 constitue le format d'enregistrement. L'enregistrement se fait en utilisant les deux canaux A et B dont les signaux sont enregistrés simultanément sur deux pistes différentes, mais adjacentes, ces deux pistes formant ce qu'on a appelé une paire de pistes. Les intervalles de suppression trame, contenant des données à 20,25 MHz, sont situés alternativement soit à la fin du premier quart de piste, soit à la fin du troisième quart de piste. Ceux de ces intervalles qui sont montrés sont indiqués par k , k + 1, k + 2, etc.

Plus précisément, l'enregistrement de la trame K part de l'intervalle k jusqu'à l'intervalle k + 1. Il apparaît que chaque trame d'analyse de l'image est portée par une double piste et demi.

A la Fig. 2, on a représenté une bande magnétique BM dont le sens de défilement indiqué par la flèche F est de droite à gauche. Le sens d'écriture est indiqué par la flèche oblique G montant de droite à gauche. Les doubles pistes sont représentées par des paires de lignes obliques p, p + 1, p + 2, p + 3, etc. Dans chaque paire, la première ligne oblique, en partant de la gauche, correspond à l'enregistrement des signaux du canal A et l'autre ligne à l'enregistrement des signaux du canal B. La paire p enregistre, à partir de la zone k indiquée en grisé et située à la fin du premier quart, le début d'une trame K; la paire (p + 1) enregistre la fin de la trame K jusqu'à la zone (k + 1) indiquée en grisé et située à la fin du troisième quart, puis le début de la trame (K + 1); la paire (p + 2) enregistre la suite de la trame (K + 1); la paire (p + 3) enregistre la fin de la trame (K + 1) jusqu'à la zone (k + 2) indiquée en grisé et située à la fin du premier quart. On se retrouve a lors dans un état identique à celui de la zone k dans la paire p , etc.

Les zones k, k + 1, k + 2, etc., correspondent évidemment aux intervalles de suppression trame qui, dans le système HDMAC, contiennent des données complémentaires à 20,25 MHz. Ces zones sont situées alternativement soit à la fin du premier quart d'une paire de pistes, soit à la fin du troisième quart, c'est-à-dire dans des régions où les contacts têtes/bande sont meilleurs que sur les bords de la bande BM ce qui améliore l'enregistrement des données complémentaires.

L'enregistrement d'une double piste s'effectue pendant la rotation de 180° du bloc de têtes ce qui entraîne que le traitement temporel de l'information doit délivrer un signal utile d'une durée légèrement inférieure à l'écriture d'une double piste. Ainsi, la commutation des têtes, en lecture, peut s'effectuer pendant le temps restant ou "gap", sans perte d'information. Les droites en traits tirets parallèles aux bords de la bande BM, Fig. 2, déterminent entre elles et les bords adjacents les zones de "gap".

On verra dans la suite que le nombre de lignes enregistrées sur chaque double piste n'est pas constant et comment la différence de longueur de la piste enregistrée est compensée par une variation de la durée et de la position du "gap".

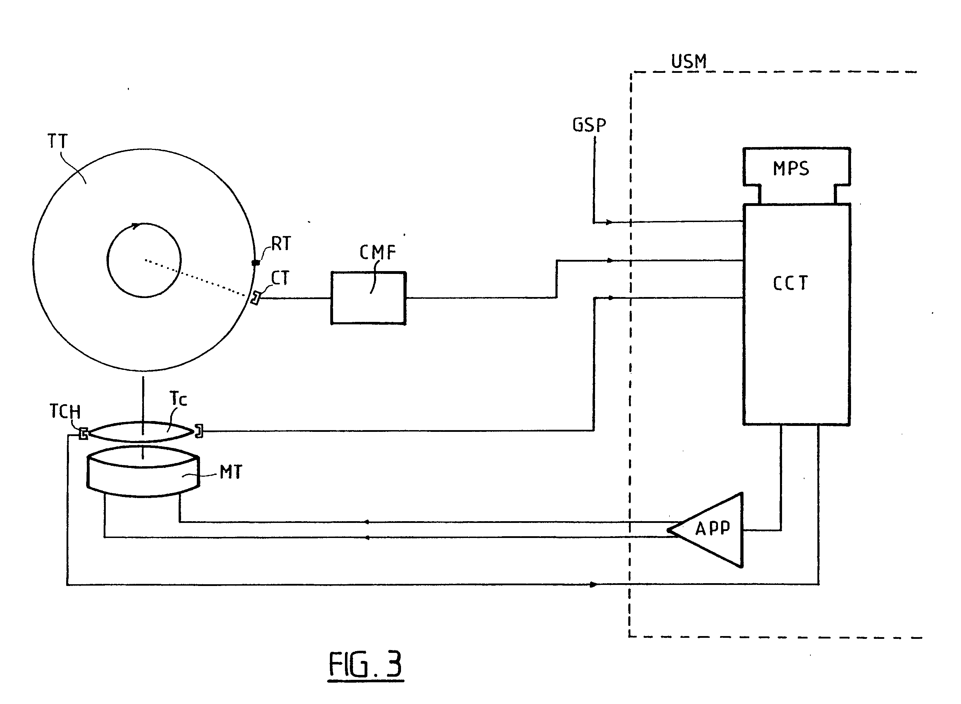

La Fig. 3 montre les moyens permettant de placer les zones k, k + 1, k + 2, etc., dans les positions montrées à la Fig. 2. Dans tout enregistreur vidéo, il existe une unité de servo-mécanismes USM qui a pour rôle de maintenir constante la vitesse de défilement de bande en ce qui concerne le servo de cabestan, non montré, et la vitesse de rotation du moteur MT qui entraîne le tambour TT qui porte les têtes en ce qui concerne le servo têtes.

A l'enregistrement, la vitesse et la phase du tambour TT sont régulées de manière que le signal inscrit sur les pistes corresponde exactement au format d'enregistrement, notamment en ce qui concerne la position des intervalles de suppression trame k , k + 1, etc., Fig. 2. L'information de phase du tambour de têtes TT est donnée, à chaque tour, par le passage devant un capteur CT, d'un repère RT monté sur la périphérie du tambour TT, en produisant une impulsion.

L'unité USM comprend des circuits de calculs classiques CCT qui sont commandés par un microprocesseur MPS et qui ont trois entrées reliées respectivement au capteur CT par l'intermédiaire d'un circuit de mise en forme CMF, à la sortie d'un générateur de signal pilote GSP et à un capteur tachymétrique TCH, et une sortie reliée, par un amplificateur de puissance APP, au moteur MT qui entraîne le tambour TT.

A partir de l'impulsion transmise par le capteur CT, les circuits électroniques CCT engendrent, en relation avec le signal pilote à la fréquence image engendré par le générateur GSP, le signal de commande du moteur MT. En mode enregistrement, le générateur GSP fonctionne à partir du signal vidéo incident; en mode lecture, il fonctionne à partir d'un oscillateur stabilisé par un quartz.

Dans le procédé d'enregistrement suivant l'invention, la phase du tambour de têtes TT est choisie de manière à placer le front avant de la synchronisation trame 20 lignes vidéo après le point de commutation des têtes vidéo, soit 2506 microsecondes après cette commutation.

L'impulsion produite par le passage du repère RT devant le capteur CT est encore utilisée comme information temporelle pour piloter les circuits de traitement vidéo et déterminer dans le signal étendu, l'emplacement de la zone sans information ou "gap".

La vitesse de rotation du tambour de têtes TT est régulée à partir de la vitesse de rotation d'un disque tachymétrique Tc par l'intermédiaire d'un capteur TCH et des circuits CCT.

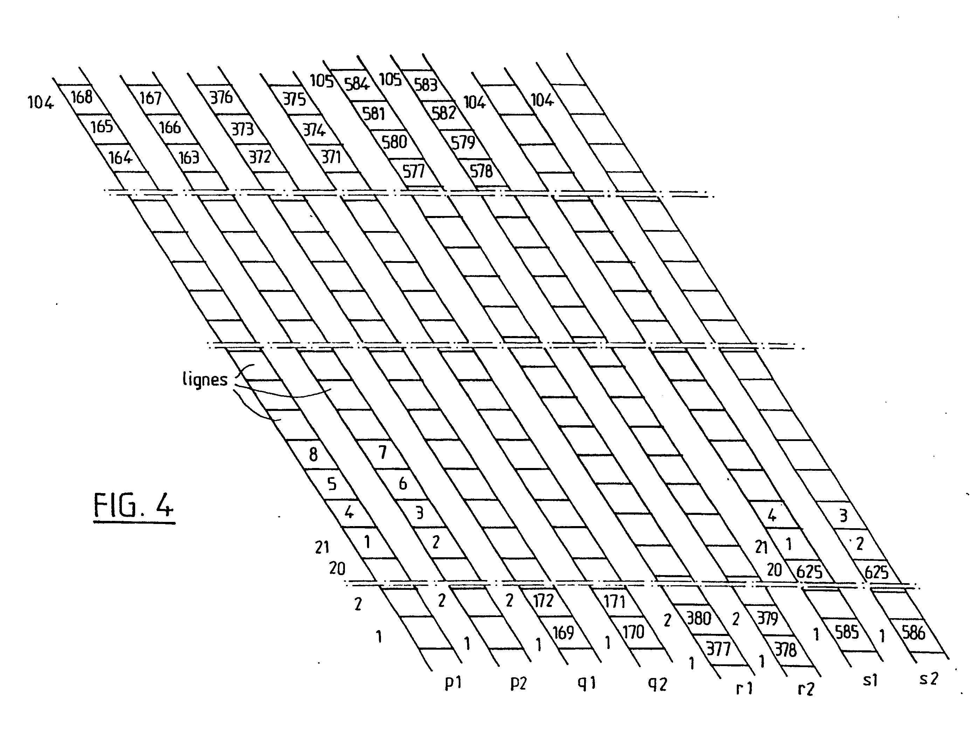

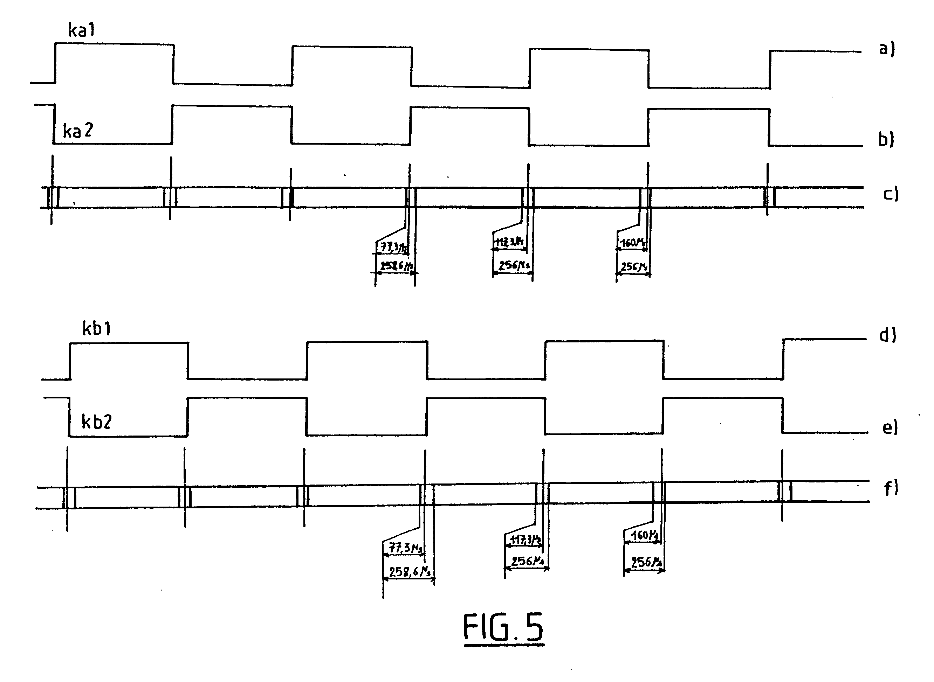

On a décrit ci-dessus le traitement de chaque de ligne de signal HDMAC pour obtenir les signaux des courbes b) et c) de la Fig. 1, qui sont enregistrés sur deux canaux séparés A et B, selon le format d'enregistrement des trames représenté à la Fig. 2. On va maintenant décrire le traitement des images en se référant au diagramme spatial de la Fig. 4 et aux diagrammes temporels de la Fig. 5.

Etant donné le format d'enregistrement suivant l'invention, l'enregistrement d'une image de 625 lignes nécessite trois demi-tours. Suivant l'invention, la répartition des lignes vidéo étendues d'une image complète sur les paires de pistes est la suivante:
- 4 fois 104 lignes étendues + 2 fois 105 lignes étendues, soit 626 lignes.

Une image HDMAC ne comprenant que 625 lignes, la 625$^e$ ligne étendue est, suivant l'invention, enregistrée deux fois, c'est-à-dire sur la piste du canal A et sur la piste du canal B, comme le montre la Fig. 4, pistes s1 et s2.

Etant donné que, sur les deux premières double piste d'une image, on enregistre 104 lignes et, sur la dernière double piste, 105 lignes, la durée des "gaps" est modifée en conséquence. Après une piste de 104 lignes, la durée du "gap" est de 2688 échantillons, soit 256 microsecondes alors qu'après une piste de 105 lignes, cette durée est de 2716 échantillons, soit 258,6 microsecondes.

Dans le diagramme spatial de la Fig. 4, la première piste p1 et la seconde piste p2 portent, sur les intervalles de temps 1 à 20, les lignes de la fin de l'image précédente et, sur les intervalles 21 à 104, les 168 premières lignes de l'image courante, puis les pistes q1 et q2 portent les lignes 169 à 376 de l'image courante, puis les pistes r1 et r2, les lignes 377 à 584, et enfin, les pistes s1 et s2 portent, sur les intervalles 1 à 20, les lignes 585 à 625, plus la ligne 625 répétée. A partir des intervalles 21 des pistes s1 et s2, on enregistre l'image suivante.

On notera que les intervalles 21 à 30 des pistes p1 et p2, c'est-à-dire la plage voisine du premier quart, portent les lignes d'une suppression trame et que les intervalles 72 à 81 des pistes q1 et q2, c'est-à-dire la plage du troisième quart, portent les lignes de la seconde suppression trame de l'image.

Enfin, l'enregistrement de la ligne 625 deux fois permet de répéter le même motif sur la bande.

On remarquera encore que, sur les pistes de chaque paire, l'enregistrement des lignes successives forme un motif en "grecque": $^1 23^{45} 6$...

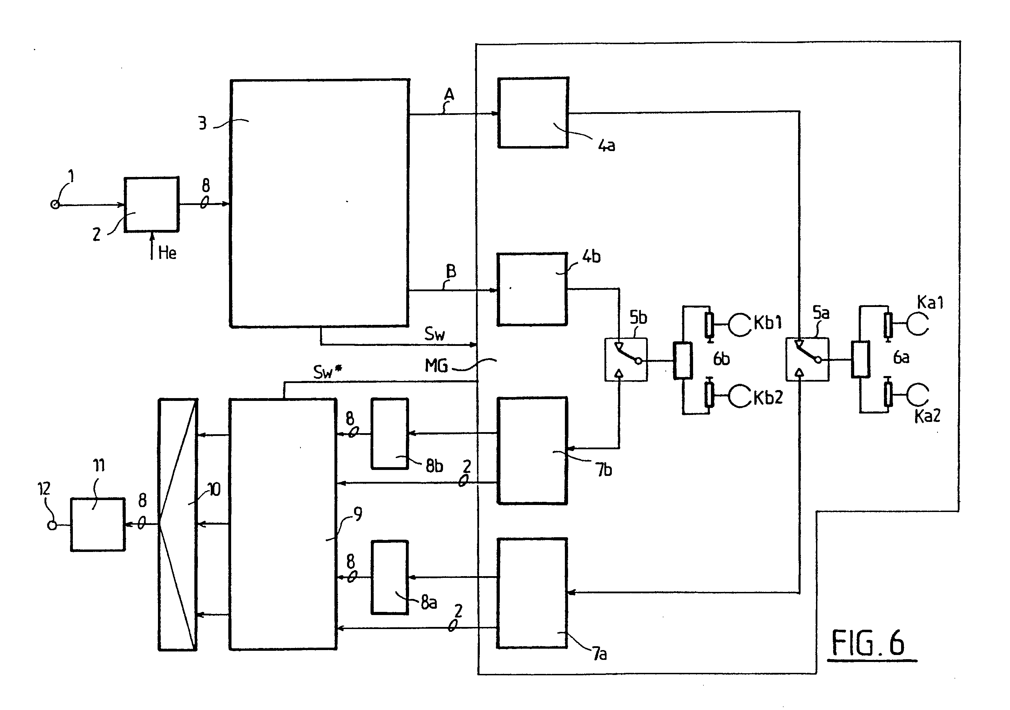

Appliqué à la borne d'entrée 1 du système de la Fig. 6, le signal vidéo HDMAC est transmis à l'entrée d'un convertisseur analogique/numérique 2 dont la sortie à huit fils est reliée à un circuit d'expansion temporelle 3 comportant deux sorties qui délivrent des signaux vidéo étendus à deux canaux A et B, respectivement. Un signal d'horloge d'échantillonnage He est relié à l'entrée de commande du convertisseur 2. En pratique, la fréquence de l'horloge d'échantillonnage He est de 20,25 MHz, ce qui correspond à 1296 fois la fréquence ligne du signal vidéo du système HDMAC. Les échantillons sont codés sur huit bits.

Les canaux A et B sont respectivement reliés aux entrées de deux circuits classiques d'enregistrement 4a et 4b dont les sorties sont reliées à des commutateurs enregistrement/lecture 5a et 5b dont les contacts communs sont respectivement reliés à un ensemble de têtes d'enregistrement et de lecture 6a et 6b. Les éléments 4a, 4b, 5a, 5b, et 6a, 6b font, par exemple, partie d'un magnétoscope MG du type grand-public, tel qu'un magnétoscope VHS à haute fidélité. A la Fig. 6, les commutateurs 5a et 5b sont montrés à l'état enregistrement.

Quand les commutateurs 5a et 5b sont à l'état lecture, ils relient respectivement les ensembles 6a et 6b aux entrées de deux démodulateurs 7a et 7b dont les sorties de signal sont respectivement reliées aux entrées de deux convertisseurs analogiques numériques 8a et 8b, et les sorties de commande à un circuit de compression temporelle 9.

Les sorties des convertisseurs 8a et 8b sont reliées aux entrées respectives d'un circuit de compression temporel 9 dont les trois sorties sont respectivement reliées aux entrées correspondantes d'un multiplexeur 10 dont la sortie est reliée à l'entrée d'un convertisseur numérique/analogique il qui délivre un signal vidéo HDMAC, qui est disponible sur la borne de sortie 12.

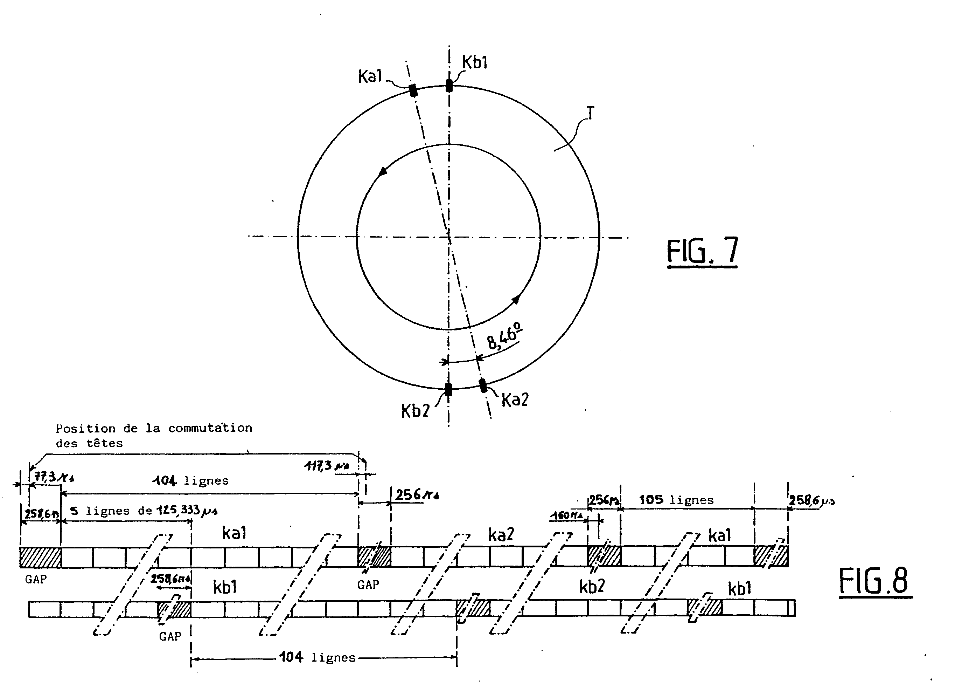

L'ensemble de têtes 6a 6b comprend deux paires de têtes, Fig. 7, la première paire Ka1, Ka2 étant associée au canal A et l'autre paire Kb1, Kb2 au canal B. Comme le montre la Fig. 7, les quatre têtes sont portées par un tambour T et sont organisées de manière que, dans chaque paire, les têtes soient opposées à 180°. La ligne diamétrale joignant les têtes de la première paire et celle qui joint les têtes de la seconde paire font entre elles un angle de 8,46°, ce qui correspond à cinq lignes étendues, soit à un décalage dans le temps de 5 x 125,333 microsecondes. La largeur de chaque piste enregistrée sur la bande magnétique du magnétoscope MG est de 25 micromètres, soit la moitié de la largeur de piste dans le système VHS. L'angle d'azimut des directions des têtes est choisi de manière à assurer la compatibilité en lecture avec les cassettes VHS.

Comme le montre la Fig. 5, les deux canaux A et B sont enregistrés simultanément. Une image complète est constituée de six pistes, ce qui correspond à un tour et demi du tambour T. Au cours de chaque tour, écrivent successivement, le doublet formé de Ka1, Kb1, puis le doublet formé de Ka2, Kb2. Pour éviter toute perte d'information due à la commutation des têtes à chaque demi-tour, il faut que le traitement temporel du signal vidéo soit prévu pour délivrer aux canaux A et B un signal étendu dont la durée soit légèrement plus courte que celle qui correspond au temps de balayage d'une piste. Le temps ainsi ménagé, que l'on a déjà ci-dessus appelé "gap", est utilisé pour couvrir la commutation des têtes.

On sait que la durée d'une image est de 40 ms et, comme on l'a mentionné ci-dessus, qu'il faut trois demi-tour du tambour de têtes pour enregistrer une image. A la Fig. 5, la courbe a) montre les temps de travail de la tête Ka1, la courbe b) les temps de travail de la tête Ka2, le diagramme c) le détail des temps essentiels pour le canal A, la courbe d) les temps de travail de la tête Kb1, la courbe e) les temps de travail de la tête Kb2 et la courbe f) les temps essentiels pour le canal B.

Les courbes a) et b) montrent comment alternent les mises au travail des têtes Ka1 et Ka2. Une image dure 40 ms et deux temps de travail des têtes. Dans le diagramme c), on a montre les positions, les durées des gaps et les instants de commutation des têtes Ka1 et Ka2. Le premier gap entre deux images successives, c'est-à-dire après une piste de 105 lignes étendues, a, comme mentionné plus haut, une durée de 258,6 microsecondes et l'instant de commutation des têtes se trouve à 77,3 microsecondes après le début du gap. Le second gap, après la première piste à 104 lignes étendues, a une durée de 256 microsecondes et l'instant de commutation des têtes se trouve à 117,3 microsecondes. Le troisième gap, après la seconde piste à 104 lignes étendues, a une durée de 256 microsecondes et l'instant de commutation des têtes se trouve à 160 microsecondes après le début du gap. Ce motif à trois pistes se répète indéfiniment. Pour des raisons de simplicité, on n'a pas, dans le diagramme spatial de la Fig. 4, fait apparaître les légères variations dans les débuts et les fins des gaps.

On notera que les courbes d), e) et f) sont décalées, avec un certain retard par rapport aux courbes a), b) et c). Cela provient du décalage de 8,46° entre les doublets, ce qui a déjà été mentionné. La courbe f) est analogue à la courbe c), mais les positions temporelles y sont indiquées en nombres d'échantillons, l'échantillonnage étant fait à 10,5 MHz.

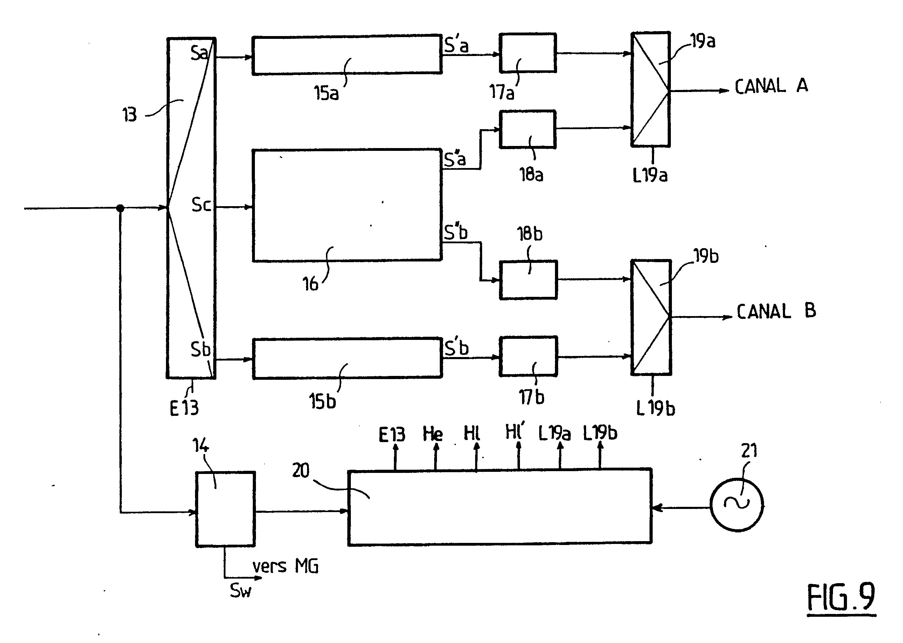

Le circuit d'expansion temporelle 3, montré à la Fig. 9, a son entrée reliée, d'une part, à l'entrée d'un démultiplexeur 13 et, d'autre part, à celle d'un extracteur de synchronisation 14. Dans l'exemple de réalisation décrit, le signal Sw sert, en lecture, de signal d'initialisation du traitement et correspond au début de la deuxième trame de chaque image, c'est-à-dire à la ligne "1" sur le canal B chargée dans une mémoire de données.

Le démultiplexeur 13 a trois sorties Sa, Sb et Sc, et une entrée de commande E13. Les sorties Sa et Sb sont respectivement reliées à deux unités 15a et 15b de décompression temporelle des zones CHR et LUM du signal de la Fig. 1. La sortie Sc est reliée à l'entrée d'un circuit de traitement des données numériques 16. Les sorties respectives S'a et S'b des unités 15a et 15b sont reliées aux entrées de deux convertisseurs numérique/analogique 17a et 17b. Le circuit de traitement 16 a deux sorties S''a et S''b qui sont respectivement reliées à deux autres convertisseurs numérique/analogique 18a et 18b. Les sorties des convertisseurs 17a et 18a sont respectivement reliées aux entrées d'un multiplexeur 19a dont la sortie est reliée au canal A, Fig. 6. Les sorties des convertisseurs 17b et 18b sont respectivement reliées aux entrées d'un multiplexeur 19b dont la sortie est reliée au canal B, Fig. 6. On a noté L19a et L19b les entrées de commande des multiplexeurs 19a et 19b.

Une sortie du circuit extracteur de synchronisation 14 est reliée à l'entrée d'une base de temps principale 20 dont l'entrée d'horloge est reliée à la sortie d'un oscillateur stabilisé 21. La base de temps principale 20 délivre des signaux d'horloge He, Hl et Hl', ainsi que des signaux de commande logique E13, L19a et L19b aux circuits correspondants montrés dans la Fig. 9. Une autre sortie du circuit extracteur de synchronisation 14 est reliée à une entrée correspondante, non montrée, du magnétoscope MG pour lui appliquer un signal de synchronisation Sw. La liaison correspondante est aussi montrée à la Fig. 6.

En pratique, le signal Sw, fabriqué dans le circuit 14, est un signal de synchronisation qui correspond au début de chaque séquence complète d'écriture sur les deux canaux A et B. Cette séquence, comme on le comprendra mieux par la suite, à une durée de ?? trames du signal HDMAC incident, au bout desquelles un nouveau cycle recommence. Le signal Sw, sous la forme d'un bit, est fabriqué par décodage, dans la ligne 625 du signal HDMAC du mot LSW, et la sélection du mot W1 ou W2.

Le signal Sw est destiné à être enregistré sur une piste particulière de la bande magnétique du magnétoscope MG, c'est-à-dire la piste "control-track", avec le signal normal de pilotage des servo-mécanismes régulant la vitesse de défilement de la bande. L'enregistrement du signal Sw sur la piste "control-track" peut être effectué en utilisant un système tel que celui décrit dans le document FR-A-2 458 874.

La signal E13 est un mot de deux bits qui, appliqué à l'entrée de commande du démultiplexeur i3, provoque:
- pendant 216 périodes d'horloge He à 20,25 MHz, l'aiguillage du signal numérique délivré par le convertisseur analogique/numérique 2, par la sortie Sc, vers le circuit de traitement 16 qui reçoit ainsi les échantillons correspondant à la zone DON de chaque signal vidéo montre dans la courbe a) de la Fig. 1,
- puis, pendant les 1080 périodes d'horloge suivantes, l'ai guillage du signal numérique alernativement vers l'unité 15a ou l'unité 15b, deux lignes consécutives sur quatre.

Le signal L19a commande le multiplexeur 19a pour que, pendant 37 périodes d'horloge HI', il laisse passer vers le canal A le signal analogique provenant du convertisseur 17a, puis, pendant 217 périodes d'horloge HI', le signal analogique délivré par le convertisseur 18a, puis jusqu'à la fin de la ligne, le signal délivré par le convertisseur 17a. Le signal L19b commande de même le multiplexeur 19b.

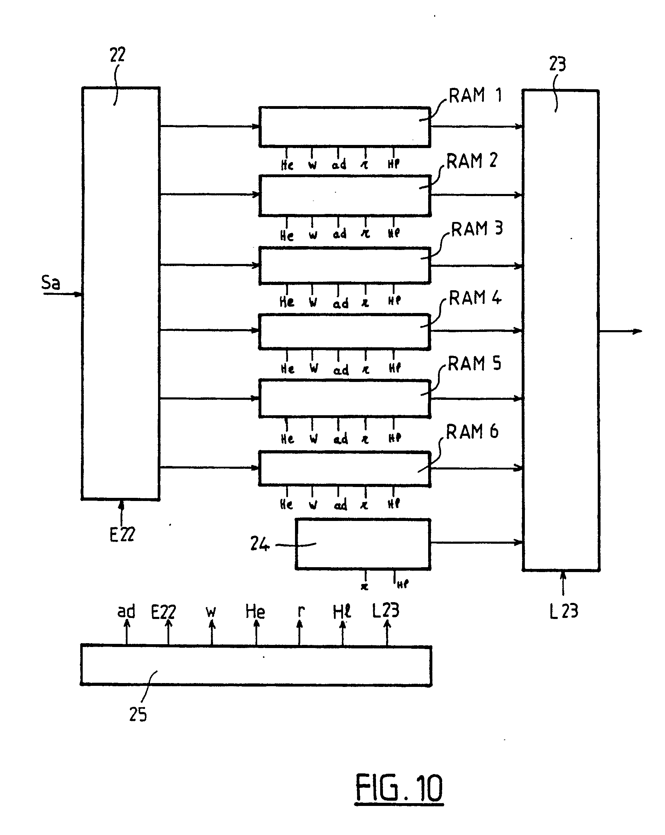

L'unité de décompression 15a, Fig. 10, comprend un démultiplexeur 22 à six sorties dont l'entrée est reliée à la sortie Sa du démultiplexeur 13 et dont les sorties sont respectivement reliées aux entrées de six mémoires à accès aléatoire RAM1 à RAM6. Les sorties des mémoires RAM1 à RAM6 sont respectivement reliées à six entrées d'un multiplexeur à sept entrées 23 dont la septième entrée est reliée à la sortie d'un circuit de synthèse de top de synchronisation et salve de fréquence 24 et dont la sortie est reliée au convertisseur numérique/analogique 17a. L'unité 15a est complétée par une base de temps annexe 25. La structure de l'unité 15b est identique à celle de l'unité 15a.

La base de temps annexe 25 délivre les signaux de commande ou d'horloges suivants:
- le signal E22 servant à sélecter, dans le démultiplexeur 22, la sortie vers laquelle les composantes de chrominance et luminance reçues du démultiplexeur 13 sont à transmettre pour les enregistrer dans une des mémoires RAM1 à RAM6,
- l'horloge d'écriture He pour les mémoires RAM1 à RAM6, soit ici un signal d'horloge à 20,25 MHz,
- le signal de commande d'enregistrement w servant à sélecter et à commuter en mode écriture l'une des mémoires RAM1 à RAM6,
- le signal d'adressage ad dans les mémoires RAM1 à RAM6, - le signal de commande de lecture r servant à sélecter et à commuter en mode lecture d'une des mémoires RAM1 à RAM6 ou le circuit de synthèse 24,
- l'horloge de lecture HI des mémoires RAM1 à RAM6, soit ici à 10,5 MHz, et
- le signal de commande L23 servant à sélecter, à chaque ligne lue, l'entrée reliée au circuit 24, puis l'entrée reliée à la mémoire RAM1 à RAM6 à lire.

La fréquence de l'horloge de lecture HI étant de l'ordre de la moitié de celle de l'horloge d'écriture He, les zones CHR et LUM se trouvent, après lecture, être étendue avec une longueur presque deux fois plus longue. En pratique, la fréquence de l'horloge HI est légèrement plus grande que la moitié de celle de l'horloge He pour permettre de loger la partie SYNC extraite du circuit 24 et fournir l'espace nécessaire à la constitution du gap.

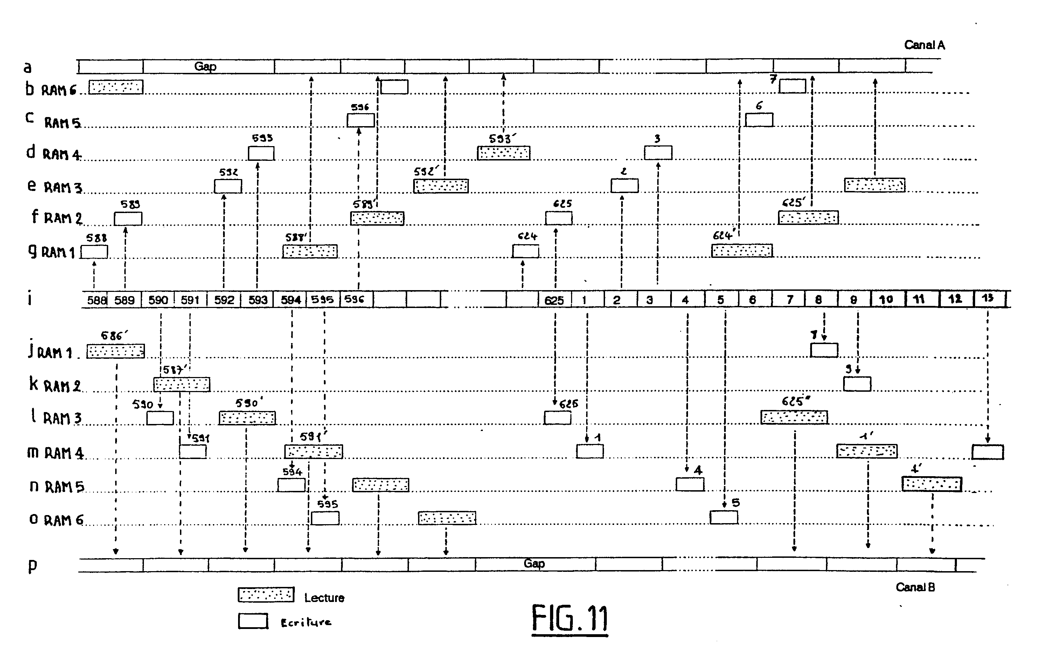

Le fonctionnement de l'unité 15a, Fig. 10, va maintenant être décrit en se reportant aux courbes b) et c) de la Fig. 1. Chacune de ces courbes se décompose en trois parties: une première partie SYNC, une seconde DON + DON et.une troisième CHR + LUM. La partie SYNC comprend une impulsion négative de synchronisation suivie d'une salve de fréquence de référence. L'impulsion négative est destinée à être reconnue dans le magnétoscope MG qui s'en sert pour son propre fonctionnement d 'une manière classique. La fréquence de la salve de référence est égale à 336 fois la fréquence ligne et est destinée à être utilisée dans la chaîne de lecture. Le contenu de cette partie SYNC est extrait, en mode enregistrement, du circuit 24 au début de chaque ligne étendue au rythme de l'horloge HI. Le contenu de la seconde partie DON + DON sera décrit dans la suite. Le contenu de la troisième partie CHR + LUM est extrait d'une des mémoires RAM1 à RAM6, sélectée par la base de temps 25 et également au rythme de l'horloge HI. Il apparaît également que la sélection des entrées dans le multiplexeur 23 est commandée en fonction de la position temporelle des parties dans la ligne étendue et d'un programme qui est enregistré dans la base de temps 25 et qui découle, pour l'homme de métier, de l'examen des diagrammes de la Fig. 11.

A la Fig. 11, le diagramme i), à mi-hauteur, montre le signal HDMAC incident à la fin d'une image et au début de la suivante. Le diagramme m) montre que la mémoire RAM4 du circuit 15a reçoit les zones CHR et LUM de la ligne 1. Le contenu 1' de cette mémoire est lu plus tard avec une horloge presque deux fois plus lente pour être inséré dans le canal B, diagramme p). Cette mémoire RAM4 de 15a redevient disponible pour mémoriser le contenu de la ligne 13 et ce contenu est lu plus tard. Le diagramme e) montre que le mémoire RAM3 reçoit les zones CHR et LUM de la ligne 2 dont le contenu 2' est lu plus tard. Des flèches ont été dessinées pour illustrer les transferts des contenus des lignes successives. Les différentes lectures et écritures sont commandés par les bases de temps 20 et 25 à travers les signaux E13, E22 et L23. L'examen des autres diagrammes permet de comprendre immédiatement le fonctionnement des unités 15a et 15b, qui permettent d'insérer les parties étendues de CHR et LUM dans les canaux A et B.

Le contenu de la ligne 625 est mis en mémoire dans la mémoire RAM3 du circuit 15a, diagramme f) et dans la mémoire RAM3 du circuit 15b, diagramme l). Ces mémoires ne seront pas relues; elles ne contiennent en effet que des données numériques, lesquelles sont traitées par le circuit 16.

La Fig. 11 montrant également les gaps nécessaires au système d'enregistrement à deux têtes pour chaque canal permet également, en considérant les délais entre écriture et lecture, de comprendre l'utilité des six mémoires par unité. Les valeurs des durées des gaps sont données aux Figs. 5 et 8.

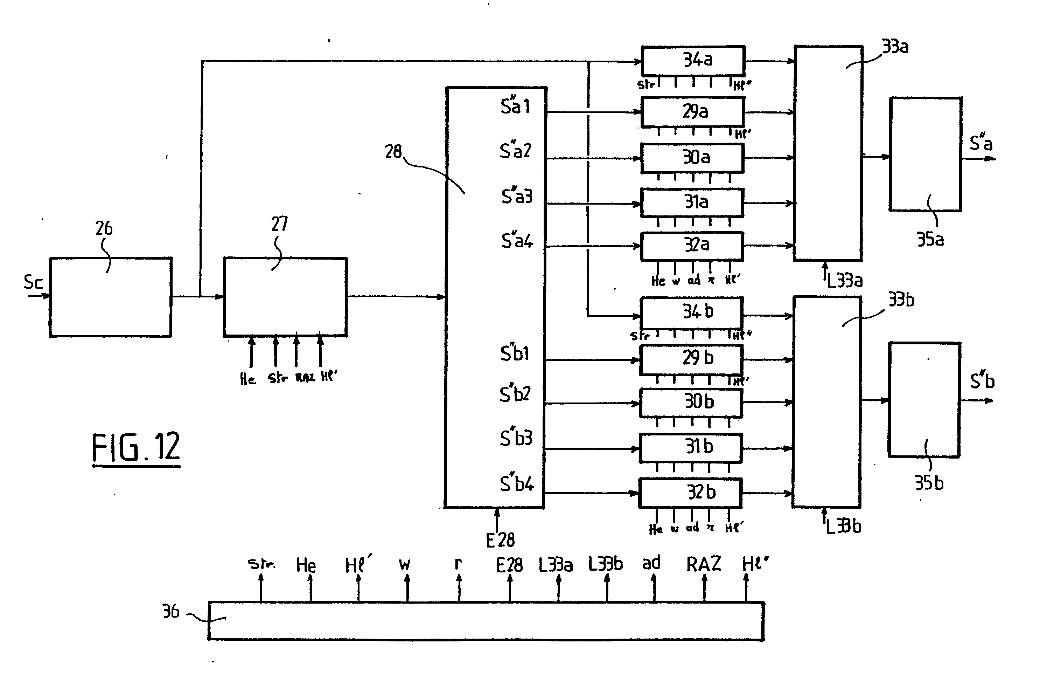

Le circuit de traitement des données 16 est montré en détail à la Fig. 12. Il comprend un décodeur de Viterbi 26 dont l'entrée est reliée à la sortie Sc du démultiplexeur 13 et dont la sortie est reliée d'abord à l'entrée d'une mémoire à accès aléatoire 27 dont la sortie est reliée à l'entrée d'un démultiplexeur 28 à deux fois quatre sorties $S''a1$, $S''a2$, $S''a3$, $S''a4$ et $S''b1$, $S''b2$, $S''b3$, $S''b4$ lesquelles sont respectivement reliées aux entrées de deux fois quatre mémoires à accès aléatoire 29a, 30a, 31a, 32a et 29b, 30b, 31b, 32b. Les sorties des mémoires 29a, 30a, 31a et 32a sont respectivement reliées aux quatre entrées d'un multiplexeur 33a à cinq entrées dont la cinquième entrée est reliée à la sortie d'une mémoire 34a dont l'entrée est reliée à la sortie du décodeur de Viterbi 26. La sortie du multiplexeur 33a est reliée à l'entrée d'un codeur NRZ/duobinaire 35a. Les sorties des mémoires 29b, 30b, 31b et 32b sont respectivement reliées aux quatre entrées d'un multiplexeur 33b à cinq entrées dont la cinquième entrée est également reliée à la sortie d'une mémoire 34b dont l'entrée est reliée à la sortie du décodeur de Viterbi. La sortie du multiplexeur 33b est reliée à l'entrée d'un codeur NRZ/duobinaire 35b. Les sorties des codeurs 35a et 35b sont respectivement reliées aux sorties $S''a$ et $S''b$, Fig. 9. Enfin, le circuit de traitement 16 est complété par une base de temps annexe 36.

La base de temps annexe 36 délivre les signaux de commande et d'horloges suivants:
- le signal Str qui, pendant la durée de la ligne 625, inhibe l'entrée de la mémoire 27 et active les entrées des mémoires 34a et 34b,
- le signal d'horloge d'écriture/lecture He pour la mémoire 27, et d'écriture dans les mémoires 29a, 30a, 31a, 32a, 29b, 30b, 31b et 32b, et 34a et 34b,
- l'horloge de lecture $HI''$ de la mémoire 27 et des mémoires 29a, 30a, 31a, 32a et 29b, 30b, et 31b, 32b,
- l'horloge de lecture $HI''$ des mémoires 34a et 34b,
- le signal de commande d'enregistrement $\overline{w}$ servant à sélecter et commuter en mode écriture l'une des mémoires 29a à 32b, et 34a et 34b,
- le signal de commande de lecture r servant à sélecter et commuter en mode lecture l'une des mémoires 29a à 32b, et 34a et 34b,
- le signal E28 servant à sélecter, dans le démultiplexeur 28, la sortie vers laquelle les données lues dans la mémoire 27 sont à transmettre pour les écrire dans l'une des mémoires 29a, 30a, 31a, 32a, 29b, 30b, 31b et 32b,
- les signaux de commande de sélection d'entrée L33a et L33b des multiplexeurs 33a et 33b, respectivement,
- un signal de remise à zéro RAZ.

A chaque ligne de signal HDMAC, le décodeur de Viterbi 26 reçoit du démultiplexeur 13, Fig. 9, le signal numérique de la zone DON, courbe a) de la Fig. 1, dans lequel les données sont codées en duobinaire et délivre ces mêmes données en code NRZ, en utilisant l'algorithme de Viterbi qui vérifie le critère de "maximum de vraisemblance a posteriori", soit la recherche du chemin le plus probable entre deux états successifs du système. Un tel décodeur a été décrit dans le document FR-A-2 606 575. On rappelle que le code duobinaire est un code à réponse partielle qui introduit une certaine corrélation dans le signal transmis. En particulier, le codage duobinaire interdit certaines transitions. Chaque fois qu'une transition interdite est détectée à la réception dans le décodeur, celui-ci réinitialise le traitement de décodage et, de plus, délivre un signal d'erreur. Dans le décodeur 26, on n'utilise pas le signal d'erreur; par contre, on verra que, dans les décodeurs de Viterbi utilisés dans la chaîne de lecture, les signaux d'erreurs sont comptés et utilisés pour prendre des décisions.

La mémoire vive à accès aléatoire ou RAM 27 a une capacité de 512 bits. Quand une ligne du signal vidéo incident, par exemple la ligne "3", est transmise par le démultiplexeur 13 et est décodée dans le décodeur 26, la mémoire 27 est mise en mode d'écriture pendant 216 périodes d'horloge d'écriture He, après quoi le décodeur 26 ne reçoit plus de signaux. La base de temps 36 fait alors avancer les adresses de quatre pas supplémentaires. Ce décalage de l'adresse a pour effet d'ajouter quatre bits à zéro dans la mémoire 27.

Quand la ligne suivante, soit dans l'exemple décrit la ligne "4", est transmise par le démultiplexeur 13 et est décodée dans le décodeur 26, la mémoire 27 est encore mise en mode d'écriture pour 216 périodes. On a alors enregistré dans la mémoire 27 les échantillons des données des lignes "3" et "4" séparés par quatre zéros. Ainsi, on crée, dans la mémoire 27, le contenu de la partie DON + DON d'une ligne étendue, courbes b) et c), Fig. 1.

Chaque ensemble DON + DON est sélectivement transféré, pendant le temps correspondant à la zone CHR + LUM, par le démultiplexeur 28, soit dans le couple de mémoires 29a et 29b, soit dans le couple de mémoires 30a et 30b, soit dans le couple de mémoires 31a et 31b, soit dans le couple de mémoires 32a et 32b. La sélection est réalisée par le signal E28. Dès ce transfert terminé, la mémoire 27 est remise à zéro par le signal RAZ de la base de temps 36.

L'horloge de lecture HI′ des couples de mémoires 29a, 29b; 30a, 30b; 31a, 31b; et 32a, 32b est plus lente que l'horloge d'écriture He. Celle-ci était de 20,25 MHz tandis que l'horloge de lecture HI′ est de 21 MHz. Comme un bit de données est représenté dans les mémoires par deux points mémoire, donc deux périodes d'horloge, on voit que sa durée passe de 2/1296, soit 98,76 ns, à 2/1344, soit 95,2 ns. Le spectre du signal duobinaire qui sera reconstitué après conversion dans les codeurs 35a ou 35b, sera donc augmenté de 5,06 MHz à 5,25 Cette légère augmentation de l'encombrement en fréquence des données codées en duobinaire reste compatible avec un canal dont la largeur de bande est de l'ordre de 6 MHz.

Les mémoires 34a et 34b sont prévues pour mémoriser, toutes les deux, les données portées par la ligne 625. L'horloge d'écriture He de ces mémoires est la même que celle des mémoires 29a à 32b, et leur horloge de lecture HI′ fonctionne à 21 MHz. Les deux mémoires 34a et 34b ont une capacité de 2 048 bits supérieure à la capacité des mémoires 29a à 32b qui n'est que de 512 bits.

On notera que la lecture de la ligne 625 vers les canaux A et B occupe un temps inférieur à la durée d'une ligne étendue courante, soit 125,3 microsecondes. L'espace restant peut éventuellement être utilisé pour l'insertion, par les circuits 15a et 15b, de signaux de test ou de réglage, par exemple, pour le contrôle de la correction de l'évaluation des têtes en lecture, en fonction des variations de la tension de bande.

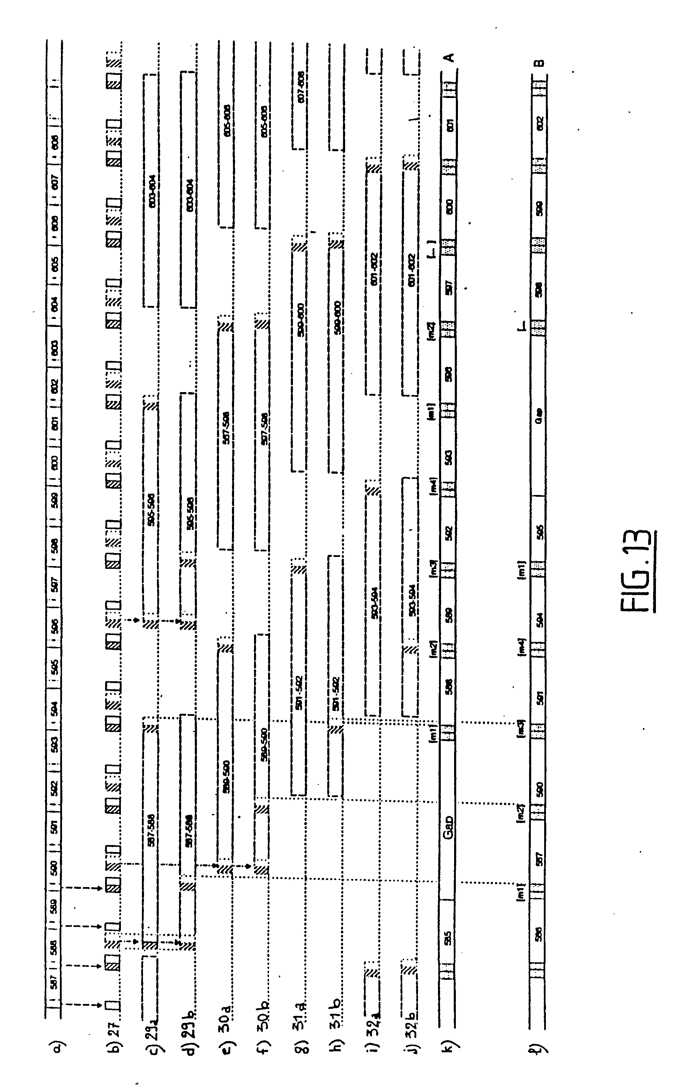

A la Fig. 13, la courbe a) montre le signal vidéo HDMAC incident et la courbe b) montre comment évolue le contenu de la mémoire 27. Ce contenu étant celui d'un paquet de données DON de ligne impaire (2i + 1), auquel, à la ligne suivante vient s'ajouter celui d'une ligne paire 2(i + 1) et, enfin, étant remis à zéro dès le transfert dans une des paires de mémoires 29a, 29b ou 30a, 30b, et ainsi de suite. Les diagrammes c) et d), Fig. 13, montrent la succession des contenus DON + DON des mémoires 29a et 29b, les diagrammes e) et f) l'évolution des contenus DON + DON des mémoires 30a et 30b, les diagrammes g) et h) l'évolution des contenus DON + DON des mémoires 31a et 31b, et les diagrammes i) et j) l'évolution des contenus des mémoires 32a et 32b. Enfin, les diagrammes k) et l) montrent les contenus des canaux A et 8, en ce qui concerne les données.

En pratique, les signaux L33a et L33b de la base de temps annexe 36 servent à aiguiller respectivement les contenus des mémoires 29a, 29b; 30a, 30b; ...; 32a, 32b et 34a, 34b vers les codeurs 33a et 33b en fonction d'un programme qui correspond aux diagrammes de la Fig. 13 et qui est enregistré dans la base de temps 36.

Enfin, les convertisseurs 17a et 18a, Fig. 6, transforment les signaux provenant des sorties S″a et S″a en signaux analogiques et le multiplexeur 19a réalise l'emboîtement de la partie DON + DON délivrée par le convertisseur 18a entre les parties SYNC et CHR + LUM délivrées par le convertisseur 17a. On obtient donc les signaux qui sont représentés par les courbes b) ou c) de la Fig. 1. Le multiplexeur 19a délivre donc le contenu du canal A qui est formé d'une suite de lignes étendues conformes aux signaux soit de la courbe b), soit de la courbe c). En ce qui concerne la formation du contenu du canal B, le processus est le même.

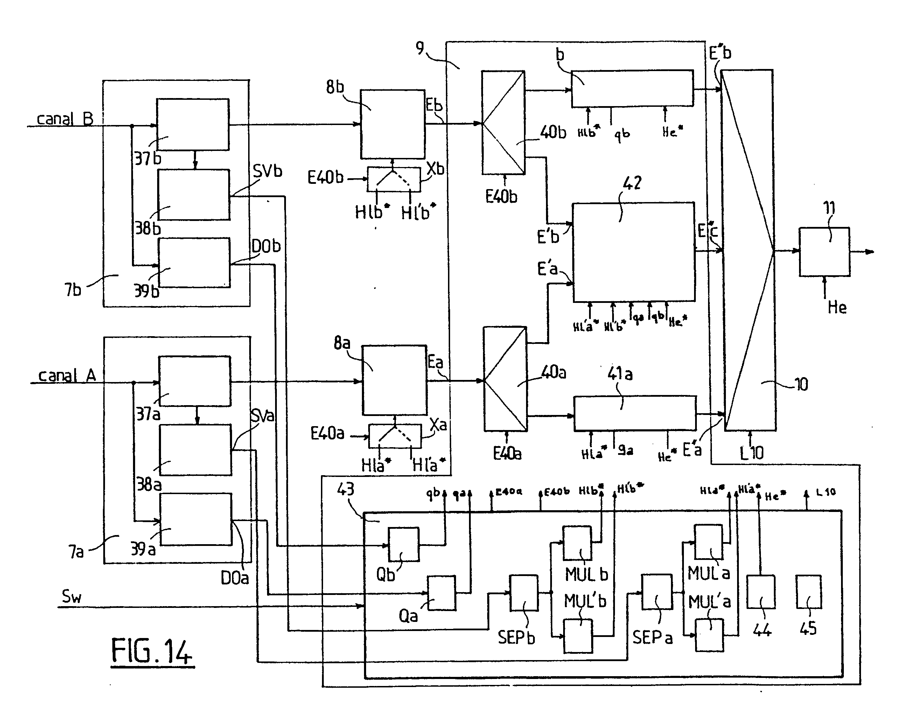

Les démodulateurs 7a et 7b, Fig. 14, font partie du magnétoscope MG où ils remplissent des fonctions classiques, à savoir l'amplification et la correction des signaux lus par les têtes Ka1, Ka2 et Kb1, Kb2, puis la démodulation, le filtrage et la désaccentuation de ces signaux. Comme le montre la Fig. 14, ils comprennent chacun un démodulateur proprement dit 37a ou 37b, un circuit séparateur de synchronisation 38a ou 38b, et un détecteur classique de drop-out 39a ou 39b. Les entrées de 37a et 39a, et de 37b et 39b sont respectivement reliées en parallèle au canal A et au canal B. Une sortie classique de chaque démodulateur 37a ou 37b est reliée à l'entrée du séparateur correspondant 38a ou 38b. Les circuits séparateurs de synchronisation détectent les impulsions négatives des parties SYNC des lignes étendues lues et les orientent respectivement, avec les salves de référence qui les suivent, vers leurs sorties SVa et SVb. Les détecteurs de drop-out 39a et 39b délivrent respectivement sur leurs sorties DOa et DOb un bit "1" ou un bit "0" selon que la ligne étendue en cours de lecture est affectée d'une chute d'amplitude brutale et durable, par exemple dépassant quelques microsecondes, du signal lu. Les sorties de signal des démodulateurs 37a et 37b sont respectivement reliées aux entrées des convertisseurs analogique/numérique associés 8a et 8b.

Chaque convertisseur analogique/numérique 8a ou 8b convertit le signal analogique appliqué en échantillons codés sur huit bits; il fonctionne successivement avec différentes horloges d'échantillonnage, soit 672 fois la fréquence ligne pour les parties SYNC et CHR + LUM, Fig. 1, soit 1344 fois la fréquence ligne étendue pour la partie DON + DON. Ces fréquences sont pratiquement égales aux fréquences HI et HI′ utilisées dans la chaîne d'enregistrement et on verra dans la suite comment on les obtient. Les commutations de ces horloges s'effectuent à des instants qui, dans le signal étendu correspondent à des paliers gris ou noir.

Pour chaque convertisseur 8a ou 8b, l'entrée d'horloge est reliée à la sortie d'un commutateur Xa ou Xb qui reçoit les deux horloges d'échantillonnage associées au canal A ou B. Ces horloges sont synthétisées à partir de la salve de référence ajoutée dans la partie SYNC au cours de l'enregistrement. La valeur de la fréquence de la salve de référence est de 336 fois la fréquence ligne et est donc théoriquement dans un rapport simple soit 1/2 avec HI, soit 1/4 avec HI′. Etant donné la séparation des canaux A et B sur la bande du magnétoscope, on distingue deux couples d'horloges d'échantillonnages HIa*, HI′a* et HIb*, HI′b* qui sont synthétisées séparément à partir des salves délivrées aux sorties SVa et SVb, respectivement.

Le circuit de compression temporelle 9, montré à la Fig. 14, a deux entrées de signal Ea et Eb respectivement reliées aux sorties des convertisseurs 8a et 8b et deux paires d'entrées de commande respectivement reliées aux sorties DOa, DOb et SVa, SVb.

L'entrée Ea est reliée à l'entrée d'un démultiplexeur 40a à deux sorties dont une est reliée à une unité de compression temporelle 41a des parties CHR + LUM des lignes étendues lues. L'entrée Eb est reliée à un démultiplexeur 40b à deux sorties dont une est reliée à l'entrée d'une unité de compression temporelle 41b des parties CHR + LUM des lignes étendues lues. Les secondes sorties des démultiplexeurs 40a et 40b sont respectivement reliées à deux entrées E′a et E′b d un circuit de traitement 42 des données numériques DON + DON des lignes étendues lues. Les sorties des unités 41a et 41b, et du circuit de traitement 42 sont respectivement reliées aux entrées E″a, E″b et E″c du multiplexeur 10 à trois entrées dont la sortie est reliée au convertisseur 11, Fig. 6.

Dans le circuit 9, les signaux délivrés par les sorties DOa, DOb, SVa et SVa sont appliqués à des entrées correspondantes d'une base de temps principale 43. Celle-ci comprend deux mémoires Qa et Qb dont les entrées reçoivent respectivement les signaux de DOa et DOb, et deux séparateurs de salve SEPa et SEPb qui reçoivent respectivement les signaux de SVa et de SVb. Les sorties des mémoires Qa et Qb sont reliées à deux sorties correspondantes qa et qb de la base de temps 43. La sortie du séparateur SEPa est reliée à deux multiplicateurs de fréquence MULa et MUL′a dont les sorties délivrent les horloges reconstituées HIa* et HI′a*. De même, la sortie du séparateur SEPb est reliée à deux multiplieurs qui fournissent les horloges reconstituées HIb* et HI′b*. La base de temps 43 comprend encore un oscillateur stabilisé 44 fournissant une horloge de lecture He*, qui est égale à l'horloge He utilisé dans la chaîne d'enregistrement, et un circuit logique 45 qui fournit des signaux de commutation E37a, E37b et L10 aux différents circuits concernés.

La base de temps principale 43 comporte encore une entrée à laquelle est appliqué un signal Sw* émis par le magnétoscope MG à la lecture du bit Sw sur la piste "control-track". Le signal Sw* permet, en mode lecture, d'initialiser, dans la base de temps 43, le processus de traitement dans les deux canaux A et B, l'instant "zéro" correspondant au début de la ligne "1", sur le canal B, après un gap et une ligne "625".

En pratique, les entrées d'horloge des convertisseurs 8a et 8b sont reliées aux sorties de commutateurs Xa et Xb, qui reçoivent les horloges d'échantillonnage correspondantes. Les multiplicateurs de fréquences de la base de temps 43 sont, par exemple, des oscillateurs à boucle à verrouillage de phase bien connus. Le circuit logique 45 représenté symboliquement comprend notamment des compteurs capables, pour chaque canal A ou B, à partir de la détection de l'impulsion négative de synchronisation et des horloges synthétisées de former les signaux E40a, E40b qui commandent respectivement le fonctionnement simultané du commutateur Xa et du démultiplexeur 40a, ou le fonctionnement simultané du commutateur Xb et du démultiplexeur 40b.

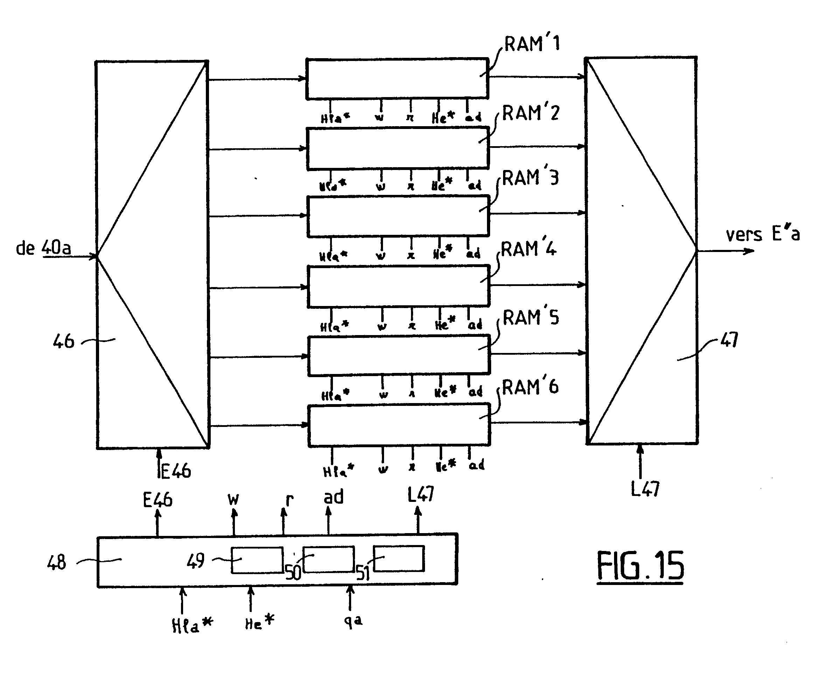

L'unité de compression 41a, Fig. 15, comprend un démultiplexeur 46 à six sorties dont l'entrée est reliée à la première sortie du démultiplexeur 40a et dont les sorties sont respectivement reliées aux entrées de six mémoires à accès aléatoire RAM′1 à RAM′6. Les sorties des mémoires RAM′1 à RAM′6 sont respectivement reliées aux six entrées d'un multiplexeur 47 dont la sortie est reliée à l'entrée E″a du multiplexeur 10, Fig. 14. L'unité 41a est complétée par une base de temps annexe 48. La structure de l'unité 41b est identique à celle de l'unité 41a.

La base de temps annexe 48 délivre les signaux de commande ou d'horloge suivants:
- le signal E46 servant à sélecter, dans le démultiplexeur 46, la sortie vers laquelle la partie CHR + LUM est à transmettre pour l'écriture dans une des mémoires RAM′1 à RAM′6,

- l'horloge d'écriture Hla* dans les mémoires RAM'1 à RAM'6, l'horloge Hla* étant reçue de la base de temps pricipale 43,
- le signal de commande d'écriture w servant à sélecter et commuter en mode écriture l'une des mémoires RAM'1 à RAM'6,
- le signal d' adressage ad dans les mémoires RAM'1 à RAM'6,
- le signal de commande de lecture r servant à sélecter et à commuter en mode de lecture l'une des mémoires RAM'1 à RAM'6,
- l'horloge de lecture He* des mémoires RAM'1 à RAM'6, l'horloge He* étant reçue de la base de temps principale 43, et
- le signal de commande L47 servant à sélecter, à chaque ligne reconstituée, l'entrée reliée à la mémoire RAM'1 à RAM'6 qui est à lire.

Par ailleurs, la base de temps annexe 48 reçoit de la base de temps principale 43 le signal qa qui est à "1" quand la partie CHR + LUM en cours d'écriture dans une des mémoires RAM'1 à RAM'6 est affectée d'un drop-out. En pratique, la base de temps 48 comprend, d'une part, un compteur 49 qui contient la position des échantillons dans chaque ligne et, d'autre part, un compteur de ligne 50. Elle est complétée par un circuit logique 48, lequel en fonction du compte dans 49 délivre le signal E46 et, en fonction du compte dans 50 et de l'information qa , délivre le signal L47.

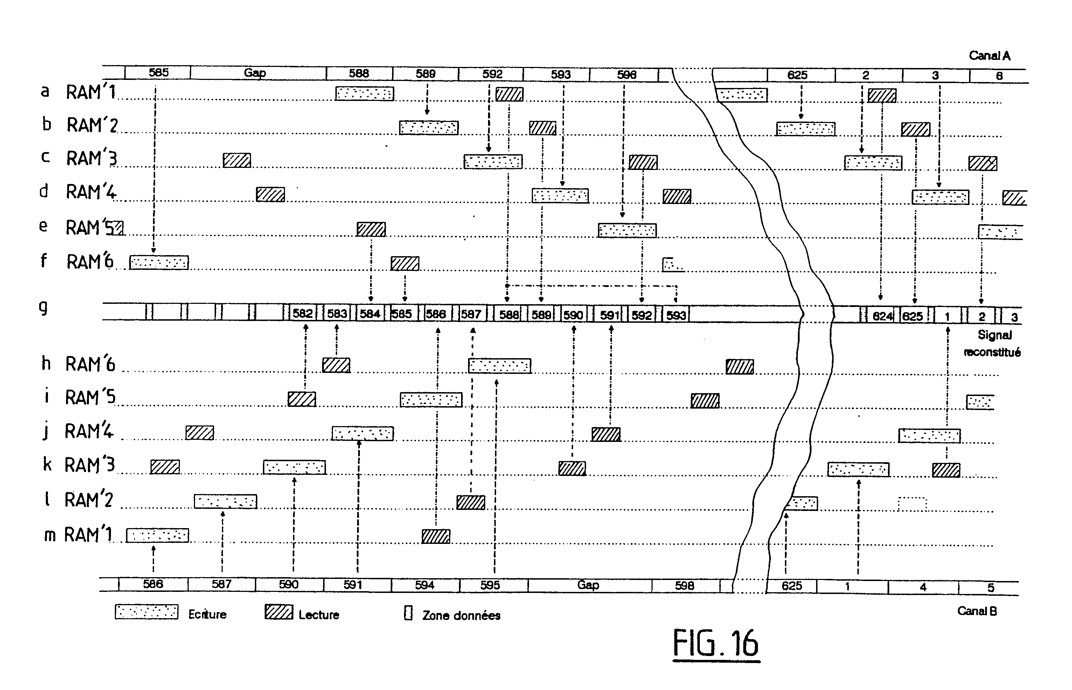

Le fonctionnement de l'unité de compression 41a sera mieux compris à l'aide des diagrammes temporels de la Fig. 16. Ces diagrammes font apparaître que les parties CHR + LUM des lignes étendues 585, 588, 589, 592, 593, 596, etc, 625, 2, 3, 6, etc., du canal A, sont séquentiellement écrites dans les mémoires RAM'6, RAM'1, RAM'2, RAM'3, RAM'4, RAM'5, comme le montrent les longs rectangles mouchetés dans les diagrammes f), a), b), c), d) et e). Il apparaît aussi que les parties CHR + LUM des lignes étenduées 586, 587, 590, 591, 594, 595, 598, etc., 625, 1, 4, 5, etc., du canal B sont séquentiellement écrites dans les mémoires RAM'1 à RAM'6 comme le montrent les longs rectangles mouchetés dans les diagrammes m) à h). On observera que, dans le canal A, il y a le gap entre les lignes 585 et 588 et, dans le canal B, entre les lignes 595 et 598.

Dans ces mêmes diagrammes, les petits rectangles hachurés représentent les mêmes informations compressées au moment où elles sont lues pour être multiplexées avec les informations provenant de l'unité 41b afin de reconstituer les zones analogiques du signal HDMAC reconstruit, diagramme g). Dans le cas où, par exemple, le contenu de la ligne étendue 593 est affecté d'un drop-out, il est écrit dans la mémoire RAM'4, mais au moment de son instant de lecture le signal L47 orientera le multiplexeur 47 vers la mémoire RAM'2 si bien que l'ancienne ligne étendue 589 sera lue et prendra la place de la ligne étendue 593. C'est ce que montre la flèche en traits mixtes de la Fig. 16. On observera aussi que, dans les diagrammes de la Fig. 16, la ligne étendue 625 apparaît, à la fois, dans le canal A et dans le canal B. On a choisi arbitraiement de lire la ligne correspondante compressée dans la mémoire RAM'2 de l'unité de compression 41a. Toutefois en cas de drop-out signalé par qa , on fera lire la mémoire RAM'2 de l'unité de compression 4lb.

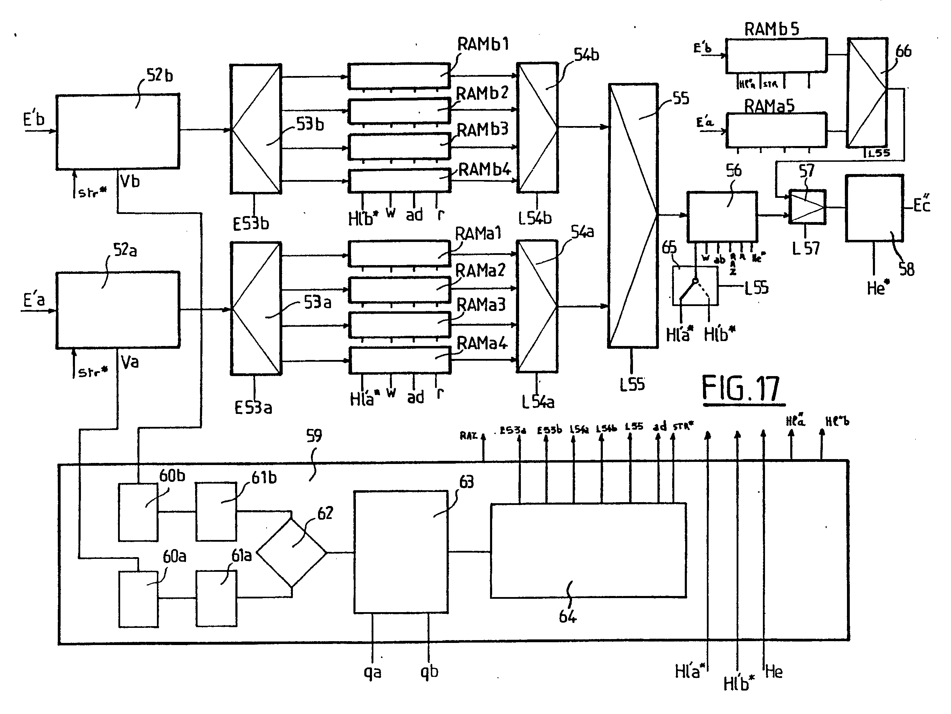

Le circuit de traitement des données numériques 42, Fig. 17, comprend deux décodeurs duobinaires de Viterbi 52a et 52b dont les entrées sont respectivement reliées aux entrées E'a et E'b et dont les sorties de signal sont respectivement reliées aux entrées de deux démultiplexeurs 53a et 53b. Chaque multiplexeur 53a ou 53b à quatre sorties qui sont respectivement reliées aux entrées de quatre mémoires à accès aléatoires RAMa1 à RAMa4 ou RAMb1 à RAMb4. Chacune de ces mémoires a une capacité de 512 bits, c'est-à-dire qu'elle est capable de mémoriser une salve de données DON + DON, courbe b) et c), Fig. 2. Les sorties des mémoires RAMa1 à RAMa4 sont respectivement reliées aux entrées d'un multiplexeur 54a tandis que les sorties des mémoires RAMb1 à RAMb4 sont respectivement reliées aux entrées d'un multiplexeur 54b. Les sorties des multiplexeurs 54a et 54b sont respectivement reliées aux entrées d'un multiplexeur 55 dont la sortie est reliée à l'entrée d'une mémoire tampon 56, dont la capacité est également de 512 bits. La sortie de la mémoire tampon 56 est reliée à une entrée d 'un multiplexeur 57 dont la seconde entrée est reliée à la sortie d'un multiplexeur 66. Les deux entrées du multiplexeur 56 sont respectivement reliées aux sorties de deux mémoires RAMb5 et RAMa5. Les entrées des mémoires RAMb5 et RAMa5 sont respectivement reliées aux entrées E'b et E'a. La sortie du multiplexeur 57 est reliée à l'entrée d'un codeur duobinaire 58 dont la sortie est reliée au multiplexeur 10, Fig. 14.

Chaque décodeur duobinaire de Viterbi 52a ou 52b comporte encore une sortie Va ou Vb, respectivement, qui délivre un bit "1" chaque fois qu'une configuration erronée a été rencontrée au cours du décodage. Les sorties Va et Vb sont respectivement reliées, à l'intérieur d'une base de temps annexe 59, aux entrées de deux compteurs 60a et 60b.

A chaque ligne étendue reçue, le compteur 60a compte le nombre de bit "1" délivré par la sortie Va et mémorise ce nombre dans une mémoire associée 61a dont la capacité est égale à deux mots. Le compteur 60b fonctionne de même en relation avec une mémoire 61b. Les sorties des mémoires 61a et 61b sont reliées aux deux entrées d'un comparateur 62 dont la sortie est reliée à une entrée d'un circuit de choix de mémoire 63. Le circuit de choix de mémoire 63 a encore deux entrées qui reçoivent les informations qa et qb du circuit logique 43, Fig. 14. La sortie du circuit de de mémoire 63 est reliée à un circuit logique 64 comprenant, entre autres, un compteur d'échantillons et un compteur de lignes, non montrés. Enfin, l'entrée d'horloge de la mémoire 56 est reliée à la sortie d'un commutateur 65 qui reçoit les deux horloges $HI'a^*$ et $HI'b^*$ et qui est commandé de la même façon que le multiplexeur 55.

En pratique, la base de temps 59 délivre les signaux de commande ou d'horloge suivants:
- les signaux E53a et E53b servant à sélecter, dans les démultiplexeurs 53a et 53b, les sorties respectives vers lesquelles les salves de données DON + DON sont à transmettre pour les enregistrer dans les mémoires RAMa1 à RAMa4, pour celles qui proviennent du canal A, et RAMb1 à RAMb4, pour celles qui proviennent du canal B,
- l'horloge d'écriture et de lecture $HI'a^*$ dans les mémoires RAMa1 à RAMa4,
- l'horloge d'écriture et de lecture $HI'b^*$ dans les mémoires RAMb1 à RAMb4,
- l'horloge d'écriture $HI''a^*$ dans la mémoire RAMa5 et l'horloge d'écriture $HI''b^*$ dans la mémoire RAMb5,
- le signal de commande d'enregistrement w servant à sélecter et commuter en mode écriture l'une des mémoires RAMa1 à RAMb4 ou la mémoire 56,
- le signal d'adressage ad dans les mémoires RAMa1 à RAMb4 et la mémoire 56,
- le signal de commande de lecture r servant à sélecter et commuter en mode lecture l'une des mémoires RAMa1 à RAMb4 ou la mémoire 56,
- l'horloge de lecture $He^*$ de la mémoire 56 et des mémoires RAMa5 et RAMb5,
- les signaux L54a, L54b et L55 servant à sélecter dans les démultiplexeurs 54a, 54b et 55, l'entrée concernée, le signal L55 servant également à commander le commutateur 65 afin de fournir à la mémoire 56 l'horloge d'écriture adéquate $HI'a^*$ ou $HI'b^*$,
- le signal $Str^*$ servant à inhiber les entrées des décodeurs 52a et 52b, et à activer les entrées des mémoires RAMa5 et RAMb5, et
- le signal RAZ servant à remettre à zéro la mémoire 56.

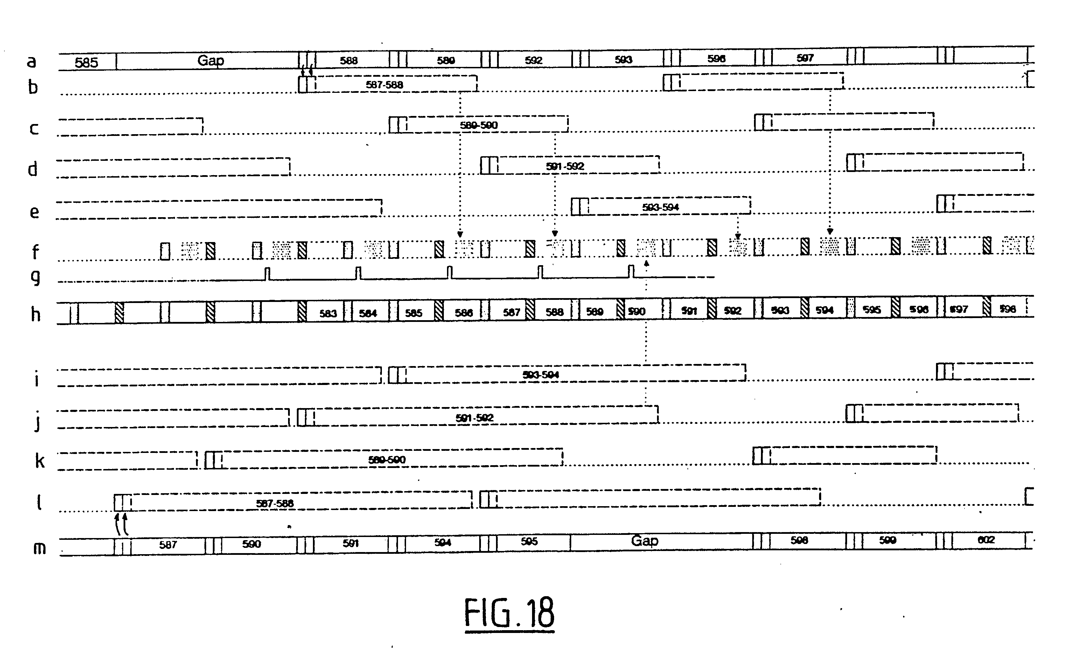

Le fonctionnement du circuit de traitement des données 39 sera mieux compris à l'aide des diagrammes temporels de la Fig. 18. Les diagrammes a) et m) font apparaître les salves respectivement lues dans les canaux A et B. Par exemple, la ligne étendue "588" du canal A porte les données des lignes incidentes "587" et "588" et la ligne étendue "587" du canal B porte les mêmes données. Les données de la ligne étendue "588" sont montrées aiguillées vers la mémoire RAMa1, courbe b), par le multiplexeur 53a tandis que les données de la ligne étendue "587" sont aiguillées par le démultiplexeur 50b vers la mémoire RAMb1, coube 1). Les deux salves de données ont été, par exemple, considérées comme sans erreur par les décodeurs de 52a et 52b. Si l'on suppose que, de plus, les lignes étendues "587" et "588" ne sont pas l'objet de signalisation de drop-out, au début de la ligne étendue suivante du canal A, soit "589", le contenu de la mémoire RAMa1 est lu et écrit dans la mémoire 56, courbe f). La lecture de la mémoire 56 est ensuite déclenchée au rythme de l'horloge $He^*$, pour transmettre les données de la ligne "587" au codeur duobinaire 58 afin de les retrouver au début de la ligne reconstruite "587", comme le montre le diagramme h) de la Fig. 18. La mémoire 56 est encore lue après 64 microsecondes pour transmettre les données appartenant à la ligne "588" et être placées en tête de la ligne reconstruite "588". Une fois, cette lecture faite, la mémoire 56 est remise à zéro par le signal RAZ, courbe g), pour être prête à recevoir les données des lignes étendues "589" et "590".

Dans l'exemple décrit, on suppose que les données "589" portées par le canal A et reçues dans la mémoire RAMa2, courbe c), ont comporté plus d'erreurs que celles qui étaient portées par le canal B et qui sont enregistrées dans la mémoire RAMb2, courbe k). Dans ce cas, la première partie de la mémoire 56, courbe f), sera remplie avec la première partie du contenu de la mémoire RAMb2. Par contre, la seconde partie reçue dans la mémoire RAMa2 étant bonne, elle sert à remplir la seconde partie de la mémoire 56, courbe f). La lecture de cette dernière se fait dans les mêmes conditions que précédemment.

Si un drop-out a affecté une ligne étendue, on sélecte pour remplir la mémoire 56, le contenu correspondant de la mémoire associée à l'autre canal.

En pratique, le comparateur 62 délivre l'information indiquant la ligne étendue dont les données comportent le moins d'erreurs, et le circuit logique 63, en fonction de cette information plus les informations de drop-out qa et qb , choisit, pour remplir la mémoire 56, les mémoires RAMa1 à RAMb4 à lire ainsi que dans ces mémoires quelle partie, première ou seconde, il faut lire.

De cette manière, il existe huit décisions possibles pour le choix des données à écrire dans la mémoire tampon 56.

En ce qui concerne le traitement des mémoires RAMa5 et RAMb5 qui contiennent toutes deux les données de la ligne 625, qui n'étaient pas considérées dans le fonctionnement décrit ci-dessus, la sélection a priori de la mémoire à relire est la mémoire RAMa5 correspondant au canal A. En cas de drop-out, on lit le contenu de la mémoire RAMb5.

En ce qui concerne la compression des parties CHR + LUM décrite en relation avec les Figs. 15 et 16, on a supposé jusqu'ici qu'elle était faite individuellement pour chaque canal, ce qui a conduit, dans le cas d'un drop-out, à remplacer une ligne de rang j par une ligne de rang (j-4). Il est, en pratique, possible d'avoir moins d'écart entre la ligne affectée de drop-out et la ligne remplaçante, mais il faut alors combiner les compressions dans les deux canaux. On observera que c'est ce qui est fait, Figs. 17 et 18, en relation avec les données. L'homme de métier serait tout à fait capable de procéder aux modifications nécessaires.

En ce qui concerne les données supplémentaires portées par les lignes de l'intervalle suppression trame, elles subissent un traitement identique aux composantes CHR + LUM des lignes courantes, la ligne 625 mise à part. Toutefois, en cas d'information de drop-out qa ou qb affectant ces données supplémentaires, la base de temps 43 inhibe la transmission des informations qa et qb vers les bases de temps 48 et 59. Ainsi, on ne remplace les données supplémentaires d'une ligne par celles d'une autre.

Par ailleurs, on a dans la description qui précède montré des schémas de circuits comportant des organes séparés bien différenciés, tels que mémoires, démultiplexeurs, multiplexeurs, etc. Il est bien évident que l'on pourrait pour réaliser les mêmes fonctions utiliser un ou plusieurs microprocesseurs avec des mémoires associées.

Les mémoires RAM classiques qui ont servi à illustrer les divers fonctionnements des circuits peuvent aussi être remplacées par des mémoires dites à double port, ce qui permettrait une forte réduction du nombre de composants mémoire et une simplification de leur gestion.

## Revendications

1) Procédé d'enregistrement sur bande magnétique et de lecture de signaux de système de télévision à haute définition, en particulier de signaux HDMAC, dans lequel, à l'enregistrement, le contenu de chaque signal vidéo (HDMAC), est décompressé temporellement pour être enregistré par l'un ou l'autre de deux canaux (A, B) sur une suite de paires de pistes correspondantes de la bande magnétique, les deux canaux servant à respectivement enregistrer pratiquement simultanément le contenu d'une ligne impaire (2i + 1) et celui de la ligne paire (2(i + 1)) qui la suit, et, à la lecture, les contenus d'une couple de lignes impaire (2i + 1) et paire (2(i + 1)) sont décompréssés temporellement pour restituer séquentiellement les signaux vidéo (HDMAC), caractérisé en ce que l'enregistrement d'une trame occupe une paire et demi de pistes.

2) Procédé suivant la revendication 1, caractérisé en ce que, dans la suite de paires de pistes, les contenus des intervalles de suppression trames sont situées alternativement soit sensiblement à la fin du premier quart d'une paire de pistes, soit sensiblement à la fin du troisième quart d'une paire de pistes.

3) Procédé suivant la revendication 1 ou 2, caractérisé en ce que le contenu de la ligne 625 d'une image est transmis simultanément par les deux canaux (A, B) pour être enregistré simultanément sur les deux pistes d'une paire.

4) Procédé suivant la revendication 3, caractérisé en ce que l'espace temps disponible sur chaque canal (A ou B), après la ligne 625, est utilisé pour insérer des signaux de réglage ou de test.

5) Procédé suivant la revendication 3 ou 4, caractérisé en ce que, dans un ensemble de trois paires de pistes successives, chaque piste de la première paire enregistre les contenus de 104 lignes, chaque piste de la seconde paire également les contenus de 104 lignes, et chaque piste de la troisième paire les contenus de 105.

6) Procédé suivant l'une des revendications 1 à 5, caractérisé en ce que, en mode enregistrement, chaque signal vidéo incident est numérisé, puis le signal numérique obtenu est démultiplexé temporellement, les échantillons numériques corres pondant aux composantes chrominance et luminance étant encore démultiplexés, à la fréquence ligne, sur deux voies, puis respectivement décompressés temporellement, puis convertis en composantes analogiques décompressées pour être sélectivement transmis par deux canaux (A, B), et les échantillons correspondant à la salve de données étant décodés, puis traités de manière que les données décodées portées par un signal incident de ligne paire (2(i + 1)) soient mises en série avec les données décodées portées par le signal incident de ligne impaire précédente (2i + 1) pour former un paquet de données qui, après conversion en signal analogique duobinaire, est multiplexé avec les échantillons des composantes chrominance et luminance des lignes paire (2(i + 1)) et impaire (2i + 1) portant lesdites données, composantes, les signaux transmis par les deux canaux (A, B) étant enregistrés simultanément sur deux pistes distinctes de la bande magnétique, et, en mode lecture, les signaux lus simultanément sur les pistes de la bande magnétique étant respectivement traités, pour éventuellement détecter une situation de drop-out, puis numérisés et démultiplexés temporellement pour séparer les composantes chrominance et luminance, d'une part, et les paquets de données, d'autre part, les échantillons des composantes chrominance et luminance étant décompressés et, en fonction des cas de drop-out, multiplexés et convertis en signal analogique, les paquets de données étant décodés, puis décompressés et séparés en données de ligne impaire (2i + 1) et de ligne paire (2(i + 1)), qui sont, également en fonction des informations de drop-out, sélectivement multiplexées avec les échantillons des composantes chrominance et luminance des lignes correspondantes, puis convertis avec celles-ci.

7) Procédé suivant la revendication 6, caractérisé en ce que, en mode lecture, le décodage des paquets de données codées en duobinaire, fournit des indications d'erreurs concernant séparément les données de lignes impaire (2i + 1) et paire (2-(i + 1)) qui sont associées aux informations de drop-out pour sélectivement multiplexer les données avec les composantes chrominance et luminance.

8) Moyens de mise en oeuvre du procédé d'enregistrement suivant l'une des revendications 1 à 7, caractérisés en ce qu'ils comprennent un convertisseur analogique/numérique (2) à l'entrée duquel sont appliqués les signaux vidéo (HDMAC) incidents et dont la sortie est reliée à l'entrée d'un multiplexeur (13) dont deux sorties sont respectivement reliées aux entrées d'unités (15a, 15b) de décompression temporelle de composantes chrominance et luminance, et une troisième sortie est reliée à l'entrée d'un circuit (16) de décompression temporelle de salve de données ayant deux sorties, les sorties des unités (15a, 15b) et du circuit (16) de décompression temporelle étant respectivement reliées aux entrées de deux multiplexeurs (19a, 19b) dont les sorties sont reliées par deux canaux (A, B) aux ensembles de têtes (Ka1, Ka2; Kb1, Kb2) d'enregistrement du magnétoscope (MG), le circuit (16) de décompression temporelle des salves de données comprenant un décodeur de Viterbi (26) dont la sortie est reliée, d'une part, à une mémoire d'assemblage (27) capable de mémoriser deux salves successives de données portées par une ligne impaire (2i + 1) et la ligne paire (2(i + 1)) qui la suit immédiatement, et, d'autre part, au entrées de deux mémoires de décompression temporelle du contenu des lignes de suppression trame (34a et 34b), la sortie de la mémoire d'assemblage (27) étant reliée à l'entrée d'un démultiplexeur (28) à deux fois quatre sorties (S″a1 à S″a4; S″b1 à S″b4), les quatre premières sorties (S″a1 à S″a4) étant reliées à quatre premières mémoires de décompression temporelle (29a à 32a) et les quatre secondes sorties (S″b1 à S″b4) étant reliées à quatre secondes mémoires de décompression temporelles (29b à 32b), les sorties des quatre premières mémoires de décompression temporelle (29a à 32a), ainsi que la sortie de la première mémoire de décompression temporelle des contenus des lignes de suppression trame de (34a), étant reliées aux entrées d'un multiplexeur (33a) dont la sortie est reliée à l'entrée d'un codeur duobinaire (35a) et les sorties des quatre secondes mémoires de décompression temporelle (29b à 32b), ainsi que la sortie de la mémoire de décompression temporelle des contenus des lignes de suppression trame (34b), étant reliées aux entrées d'un autre multiplexeur (33b) dont la sortie est reliée à l'entrée d'un autre codeur duobinaire (35b), les sorties des codeurs duobinaires (35a, 35b) étant reliés, par des convertisseurs numérique/analogique (18a, 18b), aux premières entrées de multiplexeurs (19a, 19b) à deux entrées dont les secondes entrées sont respectivement reliées, par des convertisseurs numérique/analogique (17a, 17b) aux sorties des unités (15a, 15b) de décompression de composantes chrominance et luminance et dont les sorties sont reliées aux deux canaux (A, B).

9) Moyens de mise en oeuvre du procédé de lecture suivant l'une des revendications 1 à 7, caractérisés en ce qu'ils comprennent deux convertisseurs a na logique/numérique (8a, 8b) aux entrées desquelles sont appliqués les signaux décompressés lus par deux ensembles de têtes (Ka1, Ka2; Kb1, Kb2) de lecture d'un magnétoscope (MG), les sorties des convertisseurs analogique/numérique (8a, 8b) étant respectivement reliées aux entrées de deux démultiplexeurs (40a, 40b), dont les premières sorties sont reliées aux entrées de deux unités (41a, 41b) de compression temporelle des composantes chrominance et luminance, et dont les deux secondes sorties sont respectivement reliées aux deux entrées d'un circuit (42) de compression temporelle des données, lequel comprend deux décodeurs de Viterbi (52a, 52b) respectivement reliées auxdites entrées et dont les sorties sont respectivement reliées aux entrées de deux démultiplexeurs (53a, 53b) dont les sorties sont reliées aux entrées de deux fois quatre mémoires tampons (RAMa1 à RAMa4; RAMb1 à RAMb4) dont les sorties sont reliées aux entrées d'un multiplexeur de sélection (54a, 54b, 55) à autant d'entrées que de mémoires tampons, dont l'entrée de commande est reliée à la sortie d'un circuit logique de commande (59), et dont la sortie est reliée à une mémoire de compression temporelle (56) dont la sortie est reliée à une entrée d'un multiplexeur (57) dont la seconde entrée est reliée à la sortie d'un multiplexeur (66) dont les deux entrées sont respectivement reliées aux sorties de deux mémoires de décompression des lignes 625 (RAMa5, RAMb5) dont les entrées sont respectivement reliées aux entrées des décodeurs de Viterbi (52a et 52b), la sortie du multiplexeur (57) étant reliée, par un codeur duobinaire (58), à une entrée d'un multiplexeur (10) à trois entrées dont les autres entrées sont respectivement reliées aux sorties des unités (41a, 41b) de compression temporelle des composantes chrominance et luminance, et dont la sortie est reliée à un convertisseur numérique/analogique (11) qui délivre le signal (HDMAC) reconstruit.

10) Moyens suivant la revendication 9, caractérisés en ce que chaque unité (41a ou 41b) de compression temporelle des composantes chrominance et luminance comprend un démultiplexeur (46) dont les sorties sont reliées à des mémoires tampons (RAM'1 à RAM'6) dont les sorties sont reliées aux entrée d'un multiplexeur (47) dont la sortie constitue la sortie de ladite unité, les entrées de commande du démultiplexeur (46) et du multiplexeur (47) étant reliées aux sorties correspondantes d'un circuit logique de commande (48).

11) Moyens suivant la revendication 9, caractérisés en ce que les deux convertisseurs analogique/numérique (8a, 8b) sont précédés de décodeurs de drop-out (7a, 7b) dont les sorties sont reliées au circuit logique de commande (59).

12) Moyens suivant l'une des revendications 8 ou 9, caractérisés en ce que les décodeurs de Viterbi comportent respectivement des sorties d'information d'erreur qui sont reliées au circuit logique de commande (59).

13) Moyens suivant la revendication 8, caractérisés en ce que les unités (15a, 15b) de décompression temporelle des composantes chorminance et luminance comporte chacune un démultiplexeur (22) dont les sorties sont reliées à des entrées de mémoires de décompression temporelle (RAM1 à RAM6) dont les sorties sont reliées à autant d'entrées d'un multiplexeur (23) qui comporte une entrée supplémentaire reliée à la sortie d'une mémoire morte (24) dans laquelle est enregistré un top de synchronisation suivi d'une salve de référence de fréquence, les unités (15a et 15b) étant complétée par une base de temps auxiliaire (25).

14) Moyens suivant les revendications 8 et 9, caractérisés en ce que les horloges d 'échantillonnage des convertisseurs analogique/numérique (8a, 8b) et d'écriture dans les mémoires (RAM'1 à RAM'6, RAMa1 à RAMa5, RAMb1 à RAMb5, et 56) sont, selon que ces circuits sont associés au canal A ou au canal B, synthétisées en utilisant la salve de référence correspondante.

15) Procédé suivant l'une des revendications 1 à 14, caractérisé en ce que le taux de décompression temporelle des composantes de chrominance et de luminance est différent de celui des données.

FIG.1

EP 0 418 180 A1

EP 0 418 180 A1

FIG.2

FIG.3

EP 0 418 180 A1

FIG. 4

ka1

a)

ka2

b)

c)

77,3µs
258,6µs

117,3µs
256µs

160µs
256µs

kb1

d)

kb2

e)

f)

77,3µs
258,6µs

117,3µs
256µs

160µs
256µs

FIG.5

FIG.6

EP 0 418 180 A1

FIG. 7

Kb1
Ka1
Kb2
Ka2
8,46°
T

FIG. 8

258,6 µs
105 lignes
254 µs
160 µs
ka1
kb1
ka2
kb2
256 µs
117,3 µs
104 lignes
5 lignes de 125,333 µs
251,6 µs
77,3 µs
258,6 µs
104 lignes
ka1
kb1
GAP
Position de la commutation des têtes

EP 0 418 180 A1

Sa

13

Sc

Sb

E13

14

vers MG

Sw

15a

S'a

17a

S'a

18a

16

S'b

18b

15b

S'b

17b

19a

L19a

CANAL A

19b

L19b

CANAL B

20

E13 He Hi Hi' L19a L19b

21

FIG.9

FIG.10

FIG.11

FIG.12

EP 0 418 180 A1

FIG.13

EP 0 418 180 A1

FIG.14

FIG.15

EP 0 418 180 A1

FIG.16

FIG.17

EP 0 418 180 A1

FIG.18

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | LE HAUT-PARLEUR, no. 1753, juin 1988, pages 78-82; E. GÜTTNER: "Magnetoscope a large bande pour signaux D2-MAC/Paquet" * En entier * | 1,6,9,15 | H 04 N 9/79 H 04 N 5/782 H 04 N 9/81 H 04 N 9/88 |
| | – – – | | |
| A | EP-A-0 262 362 (GRUNDIG E.M.V. ELEKTRO-MECHANISCHE VERSUCHSANSTALT) * Colonne 2, ligne 48 - colonne 6, ligne 41 * | 1,6,9 | |
| | – – – | | |
| A | IEEE TRANSACTIONS ON CONSUMER ELECTRONICS, vol. 34, no. 1, février 1988, pages 78-83, IEEE, New York, US; M. ITOGA et al.: "Two channel FM recording for high-definition baseband signals" * En entier * | 3 | |
| | – – – | | |
| A | EP-A-0 243 739 (GRUNDIG E.M.V. ELEXTRO-MECHANISCHE VERSUCHSANSTALT) * En entier * | 1,6,9 | |
| | – – – | | |
| A | EP-A-0 190 919 (SONY CORP.) | | |
| | – – – | | **DOMAINES TECHNIQUES RECHERCHES (Int. Cl.5)** |
| A | EP-A-0 260 045 (MATSUSHITA ELECTRIC CO., LTD) | | H 04 N |
| | – – – – – | | |

Le présent rapport de recherche a été établi pour toutes les revendications

| Lieu de la recherche | Date d'achèvement de la recherche | Examinateur |
|---|---|---|
| La Haye | 05 décembre 90 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant